# EUROPEAN PATENT APPLICATION

(11) **EP 2 670 224 A1**
(43) Date of publication of application: **04.12.2013**
(21) Application number: 13169949.8
(22) Date of filing: 31.05.2013
(51) Int. Cl.: H05B 41/288, H05B 41/292

(54) **Discharge lamp lighting device, automotive high-intensity discharge lamp lighting device, automotive headlight device, and car**

(30) Priority: 01.06.2012 JP 2012126105
(71) Applicant: Panasonic Corporation, Kadoma-shi Osaka 571-8501 (JP)
(72) Inventor: Nishikawa, Masahiro, Chuo-ku, Osaka 540-6207 (JP)
(74) Representative: Appelt, Christian W.

(57) **Abstract**

The discharge lamp lighting device in accordance with the present invention includes a controller configured to perform an abnormality judgment process of judging whether or not abnormality has occurred based on a measured value of a driving voltage defined as an AC voltage applied to a discharge lamp. The controller is configured to, in the abnormality judgment process, judge whether or not an asymmetric state in which the driving voltage lacks symmetry has occurred over a predetermined period. The controller is configured to, upon concluding that the asymmetric state has occurred over the predetermined period, conclude that the abnormality has occurred.

## Description

### Technical Field

The present invention relates to discharge lamp lighting devices, automotive high-intensity discharge lamp lighting devices, automotive headlight devices, and cars.

### Background Art

Since a high-intensity discharge lamp (e.g., a metal halide lamp) has a relatively high luminance, such a high-intensity discharge lamp is used in a vehicle (car) such as an automobile, a motorcycle, and a train.

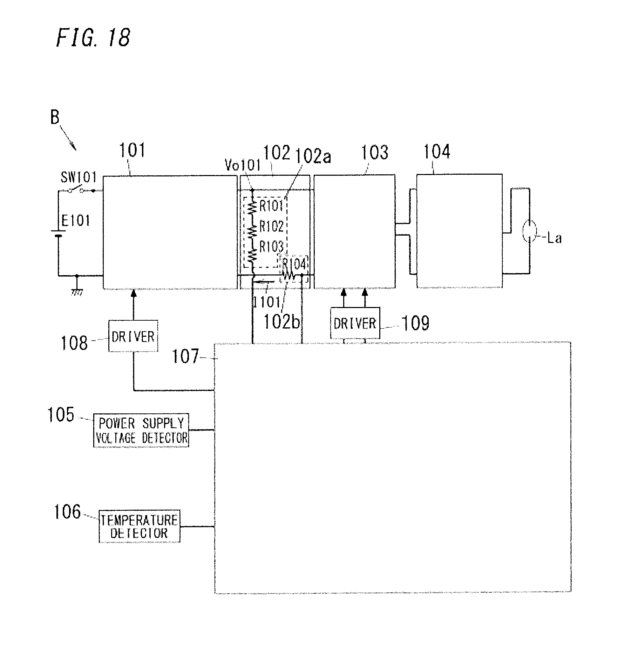

FIG. 18 shows an instance of a circuit configuration of a prior discharge lamp lighting device **"B"** configured to light a high-intensity discharge lamp. The discharge lamp lighting device **"B"** includes a DC/DC converter **101,** a detector **102,** an inverter **103,** an igniter **104,** a power supply voltage detector **105,** a temperature detector **106,** a controller **107,** and drivers **108** and **109.**

The DC/DC converter **101** functions as a power converter configured to increase or decrease a DC voltage (power supply voltage) of a DC power source **E101** to output desired DC power. For example, the DC/DC converter **101** is a flyback converter circuit. Interposed between the DC power source **E101** and the DC/DC converter **101** is a switch **SW101.** Further, the discharge lamp lighting device **"B"** is activated or deactivated according as the switch **SW101** is turned on or off. Furthermore, a low-voltage line of the DC power source **E101** is connected to a circuit ground.

The detector **102** includes a voltage detector **102a** and a current detector **102b.** The voltage detector **102a** is constituted by a series circuit of resistors **R101, R102,** and **R103** having one end connected to an output terminal of the DC/DC converter 101 and the other end connected to the controller **107.** The current detector **102b** is constituted by a resistor **R104** interposed between the output terminals of the DC/DC converter **101.**

The inverter **103** functions to convert the DC power outputted from the DC/DC converter **101** into AC power and supplies the resultant AC power to the discharge lamp **La.** For example, the inverter **103** is constituted by switching elements connected in a full-bridge manner.

The igniter **104** generates a high voltage of tens kV for starting the discharge lamp **La.**

The power supply voltage detector **105** detects the input voltage (power supply voltage) of the DC/DC converter **101.**

The temperature detector **106** detects an ambient temperature of the discharge lamp lighting device **"B".**

The controller **107** performs a feed-back control with regard to the output of the DC/DC converter **101** such that the lamp power is kept identical to a power target value.

Specifically, the controller **107** detects the output voltage **Vo101** of the DC/DC converter **101** by use of the voltage detector **102a,** thereby equivalently detecting a lamp voltage applied to the discharge lamp **La.** Further, the controller **107** detects the output current **Io101** of the DC/DC converter **101** by use of the current detector **102b,** thereby equivalently detecting a lamp current supplied to the discharge lamp **La.**

Moreover, the controller **107** creates the power target value adjusted in accordance with the power supply voltage detected by the power supply voltage detector **105** and the ambient temperature detected by the temperature detector **106.** The controller **107** calculates a current target value by dividing the resultant power target value by a detection value of the output voltage **Vo101.** The controller **107** compares the detection value of the output current **Io101** with the current target value and outputs an error signal having a magnitude corresponding to a difference therebetween to the driver **108.**

The driver **108** outputs a driving signal to the DC/DC converter **101** based on the error signal such that the detection value of the output current **Io101** is identical to the current target value.

Moreover, the controller **107** outputs a control signal for controlling the inverter **103** to the driver **109.** The driver **109** outputs a driving signal to the inverter **103** based on the control signal.

The controller **107** controls the operations of the DC/DC converter **101** and the inverter **103** through the aforementioned operation to light the discharge lamp La.

In this discharge lamp lighting device **"B",** when a short circuit or a ground fault occurs on a side of the discharge lamp **La** (load side), a ground fault current may cause an increase in a loss of circuits or a stress of components. As a result, circuit breakage may occur.

In this regard, when a short circuit or a ground fault occurs on the load side, the output voltage **Vo101** tends to be decreased. In view of this, the controller **107** terminates the operation of the DC/DC converter **101** when the output voltage **Vo101** is decreased down to a voltage not greater than a threshold (e.g., see document 1 [JP 2006-252872 A).

According to the aforementioned prior art, when a short circuit or a ground fault occurs on the load side, the controller **107** terminates the operation of the DC/DC converter **101.**

However, the controller **107** is required to, when a short circuit or a ground fault occurs on the load side, detect an event where the output voltage **Vo101** is decreased down to a voltage not greater than the threshold. When a short circuit of the discharge lamp **La** occurs, impedance of the discharge lamp La becomes substantially zero, and the output voltage **Vo101** is decreased from its normal level by a significant extent. Hence, it is possible to terminate the operation of the DC/DC converter **101.**

In contrast, when a ground fault occurs, as long as impedance between a point of the ground fault and the circuit ground is substantially zero, like the occurrence of a short circuit, the output voltage **Vo101** is decreased from its normal level by a significant extent. Hence, it is possible to terminate the operation of the DC/DC converter **101.** Note that, hereinafter, the impedance between the point of the ground fault and the circuit ground is referred to as a ground fault resistance.

However, when the ground fault resistance is relatively high, the output voltage **Vo101** is unlikely to be decreased down to a voltage not greater than the threshold. In this case, although a ground fault occurs on the load side, the controller **107** fails to terminate the operation of the DC/DC converter **101.** As a result, the DC/DC converter **101** is likely to continue the output operation despite the occurrence of the ground fault. Consequently, a current higher than that in the steady lighting state continues to flow. Thus, such a high current causes an increase in a loss of circuits or a stress of components. As a result, circuit breakage may occur.

### Summary of Invention

In view of the above insufficiency, the present invention has aimed to propose a discharge lamp lighting device, an automotive (in-car) high-intensity discharge lamp lighting device, an automotive (in-car) headlight device, and a car which are capable of detecting a ground fault even when such a ground fault occurs with a relatively high ground-fault resistance.

The discharge lamp lighting device of the first aspect in accordance with the present invention includes a controller configured to perform an abnormality judgment process of judging whether or not abnormality has occurred based on a measured value of a driving voltage defined as an AC voltage applied to a discharge lamp. The controller is configured to, in the abnormality judgment process, judge whether or not an asymmetric state in which the driving voltage lacks symmetry has occurred over a predetermined period. The controller is configured to, upon concluding that the asymmetric state has occurred over the predetermined period, conclude that the abnormality has occurred.

As for the discharge lamp lighting device of the second aspect in accordance with the present invention, in addition to the first aspect, the controller is configured to, upon acknowledging that an absolute value of one of a first measured value defined as the measured value obtained before a reversal of polarity of the driving voltage and a second measured value defined as the measured value obtained after the reversal of polarity of the driving voltage is greater than an absolute value of the other of the first measured value and the second measured value, conclude that the asymmetric state has occurred.

As for the discharge lamp lighting device of the third aspect in accordance with the present invention, in addition to the second aspect, the controller is configured to calculate a proportion of a larger one of the absolute values of the respective first and second measured values to a smaller one of the absolute values of the respective first and second measured values; and, upon acknowledging that the proportion is not less than a threshold, conclude that the asymmetric state has occurred.

As for the discharge lamp lighting device of the fourth aspect in accordance with the present invention, in addition to the third aspect, the threshold is not less than 1.5.

As for the discharge lamp lighting device of the fifth aspect in accordance with the present invention, in addition to the second aspect, the controller is configured to calculate a difference between the absolute values of the respective first and second measured values; and, upon acknowledging that an absolute value of the difference is not less than a threshold, conclude that the asymmetric state has occurred.

As for the discharge lamp lighting device of the sixth aspect in accordance with the present invention, in addition to the fifth aspect, the threshold is not less than one-half of a rated lamp voltage of the discharge lamp.

As for the discharge lamp lighting device of the seventh aspect in accordance with the present invention, in addition to the first to sixth aspects, the controller is configured to, upon acknowledging that the asymmetric state continues for the predetermined period, conclude that the asymmetric state has occurred over the predetermined period.

As for the discharge lamp lighting device of the eighth aspect in accordance with the present invention, in addition to the seventh aspect, the predetermined period has a length equal to that of a start-up period of the discharge lamp.

As for the discharge lamp lighting device of the ninth aspect in accordance with the present invention, in addition to the seventh or eighth aspect, the predetermined period has a length not less than 10 seconds.

As for the discharge lamp lighting device of the tenth aspect in accordance with the present invention, in addition to any one of the first to ninth aspects, the controller is configured to, upon acknowledging that the number of times of occurrence of the asymmetric state is not less than a predetermined number of times before a passage of a prescribed period, conclude that the asymmetric state has occurred over the predetermined period.

As for the discharge lamp lighting device of the eleventh aspect in accordance with the present invention, in addition to any one of the first to tenth aspects, the discharge lamp lighting device further includes a lighting circuit unit having a function of applying an AC voltage to the discharge lamp. The controller is configured to control the lighting circuit unit to adjust power supplied to the discharge lamp.

As for the discharge lamp lighting device of the twelfth aspect in accordance with the present invention, in addition to the eleventh aspect, the lighting circuit unit includes a power converter, an inverter, a voltage detector, and a current detector. The power converter is configured to generate DC power by use of power from an external power source. The inverter is configured to apply an AC voltage to the discharge lamp by use of the DC power generated by the power converter. The voltage detector configured to measure a voltage applied to the discharge lamp. The current detector configured to measure a current flowing through the discharge lamp. The controller is configured to adjust the DC power generated by the power converter based on a measured value of the voltage detector and a measured value of the current detector.

As for the discharge lamp lighting device of the thirteenth aspect in accordance with the present invention, in addition to the eleventh or twelfth aspect, the controller is configured to, upon concluding that the abnormality has occurred, decrease power supplied to the discharge lamp down to a predetermined value.

As for the discharge lamp lighting device of the fourteenth aspect in accordance with the present invention, in addition to the thirteenth aspect, the controller is configured to gradually decrease power supplied to the discharge lamp.

As for the discharge lamp lighting device of the fifteenth aspect in accordance with the present invention, in addition to the eleventh or twelfth aspect, the lighting circuit unit has a function of applying a DC voltage to the discharge lamp. The controller is configured to, upon concluding that the abnormality has occurred, control the lighting circuit unit in such a manner to supply to the discharge lamp a DC voltage having the same polarity as that corresponding to larger one of the absolute values of the respective first and second measured values.

As for the discharge lamp lighting device of the sixteenth aspect in accordance with the present invention, in addition to any one of the first to fifteenth aspects, the controller is configured to start the abnormality judgment process after the discharge lamp is changed from a state in the start-up period to a state in a steady lighting period.

The automotive high-intensity discharge lamp lighting device of the seventeenth aspect in accordance with the present invention is defined by the discharge lamp lighting device according to any one of the first to sixteenth aspects, and is configured to light a high-intensity discharge lamp.

The automotive headlight device of the eighteenth aspect in accordance with the present invention includes a discharge lamp, and the discharge lamp lighting device according to any one of the first to sixteenth aspects. The discharge lamp lighting device is configured to light the discharge lamp.

The car of the nineteenth aspect in accordance with the present invention includes the automotive headlight device according to the eighteenth aspect.

### Brief Description of the Drawings

FIG. 1 is a circuit diagram illustrating a configuration of a discharge lamp lighting device of the first embodiment,
FIG. 2 is a waveform chart illustrating an operation of reading a lamp voltage detection value of the discharge lamp lighting device of the first embodiment,
FIG. 3 is a waveform chart illustrating an operation in a normal state of the discharge lamp lighting device of the first embodiment,
FIG. 4 is a waveform chart illustrating an operation in a ground fault state of the discharge lamp lighting device of the first embodiment,
FIG. 5 is a waveform chart illustrating an operation in the ground fault state of the discharge lamp lighting device of the first embodiment,
FIG. 6 is a waveform chart illustrating an operation in the ground fault state of the discharge lamp lighting device of the first embodiment,
FIG. 7 is a waveform chart illustrating an operation in the ground fault state of the discharge lamp lighting device of the first embodiment,
FIG. 8 is a waveform chart illustrating an operation in the ground fault state of the discharge lamp lighting device of the first embodiment,
FIG. 9 is a graph illustrating a power target value of the discharge lamp lighting device of the first embodiment,
FIG. 10 is a waveform chart illustrating an operation in the ground fault state of the discharge lamp lighting device of the first embodiment,
FIG. 11 is a waveform chart illustrating an operation in the ground fault state of the discharge lamp lighting device of the first embodiment,
FIG. 12 is a waveform chart illustrating an operation in the ground fault state of the discharge lamp lighting device of the second embodiment,
FIG. 13 is a waveform chart illustrating an operation in the ground fault state of the discharge lamp lighting device of the second embodiment,
FIG. 14 is a waveform chart illustrating an operation in the ground fault state of the discharge lamp lighting device of the second embodiment,
FIG. 15 is a waveform chart illustrating an operation in the ground fault state of the discharge lamp lighting device of the third embodiment,
FIG. 16 is a waveform chart illustrating an operation in the ground fault state of the discharge lamp lighting device of the fourth embodiment,
FIG. 17 is a schematic view illustrating a car of the fifth embodiment, and
FIG. 18 is a block diagram illustrating a configuration of a prior discharge lamp lighting device.

### Description of Embodiments

### (FIRST EMBODIMENT)

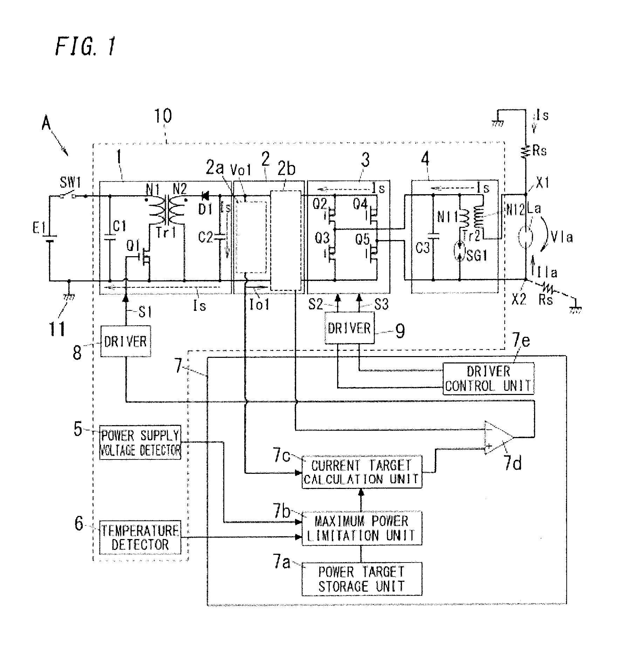

As shown in FIG. 1, the discharge lamp lighting device **"A"** of the present embodiment includes a lighting circuit unit **10** configured to supply power to a discharge lamp **La,** and a controller **7** configured to control the lighting circuit unit 10 in such a manner to adjust power supplied to the discharge lamp **La.**

The lighting circuit unit **10** has a function of applying a driving voltage defined as an AC voltage to the discharge lamp **La.** For example, the driving voltage is an AC voltage having symmetry. In the present embodiment, the driving voltage is a rectangular AC voltage with symmetry.

For example, the lighting circuit unit **10** in the present embodiment includes a DC/DC converter **1,** a detector **2,** an inverter **3,** an igniter **4,** a power supply voltage detector **5,** a temperature detector **6,** and drivers **8** and **9.**

The following detailed explanation is made to the discharge lamp lighting device **"A"** of the present embodiment. FIG. 1 shows a circuit configuration of the discharge lamp lighting device **"A"** of the present embodiment configured to light the high-intensity discharge lamp (discharge lamp) **La.** The discharge lamp lighting device **"A"** includes the DC/DC converter **1,** the detector **2,** the inverter **3,** the igniter **4,** the power supply voltage detector **5,** the temperature detector **6,** the controller **7,** and the drivers **8** and **9.** This discharge lamp lighting device **"A"** is used in a car (vehicle) such as an automobile, a motorcycle, and a train.

The DC/DC converter **1** functions as a power converter configured to increase or decrease a DC voltage (power supply voltage) of a DC power source (external power source) **E1** to output desired DC power. In brief, the DC/DC converter **1** serves as a power converter configured to generate DC power by use of power from an external power source (in the present embodiment, the DC power source **E1**)**.** Note that, for example, the DC power source **E1** is an automotive battery (in-vehicle battery). However, the DC power source **E1** is not limited to an automotive battery. Besides, the external power source is not limited to a DC power source but may be an AC power source. In this case, an AC/DC converter is used as a power converter.

As shown in FIG. 1, the DC/DC converter **1** is a flyback converter circuit using a transformer **Tr1.** There is a series circuit of a switch **SW1,** a primary winding **N1** of the transformer **Tr1,** and a switching element **Q1** interposed between input terminals of the DC/DC converter **1.** Further, there is a capacitor **C1** also interposed between the input terminals of the DC/DC converter **1.** There is a series circuit of a diode **D1** and a capacitor C2 interposed between opposite ends of a secondary winding **N2** of the transformer **Tr1.**

Turning on and off the switching element **Q1** causes an increase or decrease in the DC voltage (power supply voltage) from the DC power source **E1** to develop a DC voltage across the capacitor **C2.** In brief, the DC/DC converter **1** converts input from the DC power source **E1** into a desired DC power. Further, the discharge lamp lighting device **"A"** is activated or deactivated according as the switch **SW1** is turned on or off. Furthermore, a low-voltage line of the DC power source **E1** is connected to a circuit ground **11.**

The detector **2** includes a voltage detector **2a** and a current detector **2b.**

The voltage detector **2a** detects an output voltage **Vo1** of the DC/DC converter **1**, thereby equivalently detecting a lamp voltage **Vla** applied to the discharge lamp **La** mentioned below. In other words, the voltage detector **2a** is configured to measure the voltage (lamp voltage) **Vla** applied to the discharge lamp **La.** For example, this voltage detector **2a** is constituted by a series circuit of one or more resistors having one end connected to an output terminal of the DC/DC converter **1** and the other end connected to the controller **7.**

Further, the current detector **2b** detects an output current **Io1** of the DC/DC converter **1**, thereby equivalently detecting a lamp current **Ila** supplied to the discharge lamp **La.** In other words, the current detector **2b** is configured to measure the current (lamp current) **Ila** flowing through the discharge lamp **La.** For example, this current detector **2b** is constituted by a resistor interposed between the output terminals of the DC/DC converter **1** and is configured to detect a voltage across this resistor.

In the following explanation, if necessary, a detection value of the output voltage **Vo1** (a measured value of the voltage detector **2a)** is referred to as a lamp voltage detection value, and a detection value of the output current **Io1** (a measured value of the current detector **2b)** is referred to as a lamp current detection value.

The inverter (inverter circuit) **3** is connected to the output terminal of the DC/DC converter **1** via the detector **2,** and is constituted by switching elements **Q2** to **Q5** connected in a full-bridge manner. A series circuit of the switching elements **Q2** and **Q3** and a series circuit of the switching elements **Q4** and **Q5** are connected in parallel with each other between the output terminals of the DC/DC converter **1.**

With turning on and off alternately a set of the switching elements **Q2** and **Q5** and a set of the switching elements **Q3** and **Q4,** a rectangular AC voltage alternating at a low frequency is developed between a connection point of the switching elements **Q2** and **Q3** and a connection point of the switching elements **Q4** and **Q5.**

In brief, the inverter circuit **3** converts the DC power outputted from the DC/DC converter **1** into AC power and supplies the resultant AC power to the discharge lamp **La.** In this regard, the inverter **3** is configured to apply the AC voltage (driving voltage) to the discharge lamp La by use of the DC power generated by the DC/DC converter (power converter) **1**. The AC voltage outputted from the inverter **3** is a symmetric rectangular AC voltage. Therefore, in the AC voltage outputted from the inverter **3,** a voltage at positive polarity and a voltage at negative polarity have the same magnitude (absolute value).

Note that, preferably, a frequency of the AC voltage is in a range of 200 Hz to 600 Hz.

The igniter **4** is constituted by a capacitor **C3,** a transformer **Tr2,** and a spark gap **SG1,** and generates a high voltage of tens kV for starting the discharge lamp **La.** The capacitor **C3** is connected between output terminals of the inverter **3.** The transformer **Tr2** has a primary winding **N11** and a secondary winding **N12** which are connected to each other at their first ends. The primary winding **N11** has a second end connected to the spark gap **SG1.** A series circuit of the primary winding **N11** and the spark gap **SG1** is connected in parallel with the capacitor **C3.** Further, the discharge lamp **La** is connected between a second end of the secondary winding **N12** and a connection point of the spark gap **SG1** and the capacitor **C3.**

The power supply voltage detector **5** detects the input voltage (power supply voltage) of the DC/DC converter **1.**

The temperature detector **6** detects an ambient temperature of the discharge lamp lighting device **"A".**

The controller **7** includes a power target storage unit **7a,** a maximum power limitation unit **7b,** a current target calculation unit **7c,** an error amplifier **7d,** and a driver control unit **7e.** The controller **7** is constructed by use of a microcomputer, for example.

The power target storage unit **7a** preliminarily stores a target value (initial power target value) of the lamp power supplied to the discharge lamp **La.** This initial power target value is defined as a value in a situation where the ambient temperature and the power supply voltage are identical to respective reference values.

The maximum power limitation unit **7b** adjusts the initial power target value retrieved from the power target storage unit **7a** based on the power supply voltage detected by the power supply voltage detector **5** and the ambient temperature detected by the temperature detector **6,** thereby creating a power target value. The current target calculation unit **7c** calculates a current target value by dividing the power target value obtained from the maximum power limitation unit **7b** by the lamp voltage detection value.

The error amplifier **7d** compares the lamp current detection value with the current target value and outputs an error signal having a magnitude corresponding to a difference therebetween to the driver **8.** To reduce the magnitude of the error signal, the driver **8** outputs a driving signal **S1** determining a switching frequency and a duty cycle of the switching element **Q1** so as to turn on and off the switching element **Q1.**

Further, the driver control unit **7e** outputs a control signal for switching control of the switching elements **Q2** to **Q5** to the driver **9.**

In response to the control signal, the driver **9** outputs, to the inverter **3,** driving signals **S2** and **S3** to turn on and off the set of the switching elements **Q2** and **Q5** and the set of the switching elements **Q3** and **Q4** alternately.

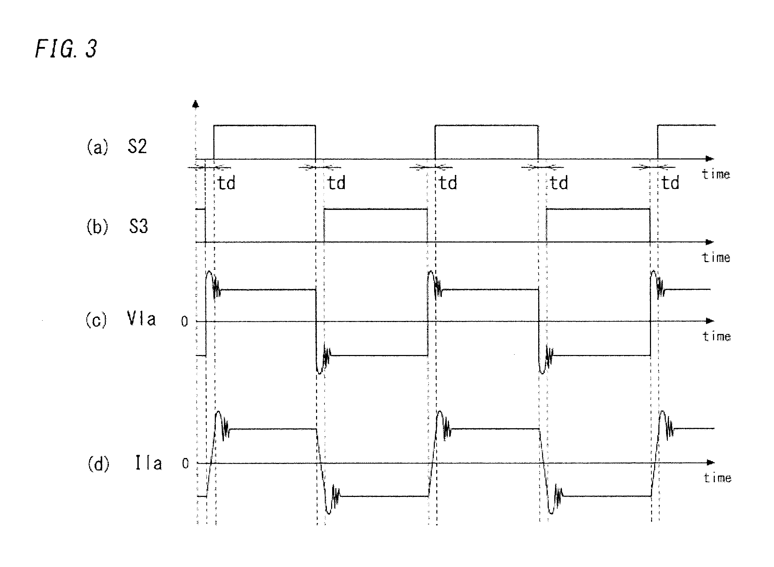

As shown in (a) and (b) of FIG. 3, the driving signal **S2** for driving the switching elements **Q2** and **Q5** and the driving signal **S3** for driving the switching elements **Q3** and **Q4** alternate between an H level and an L level.

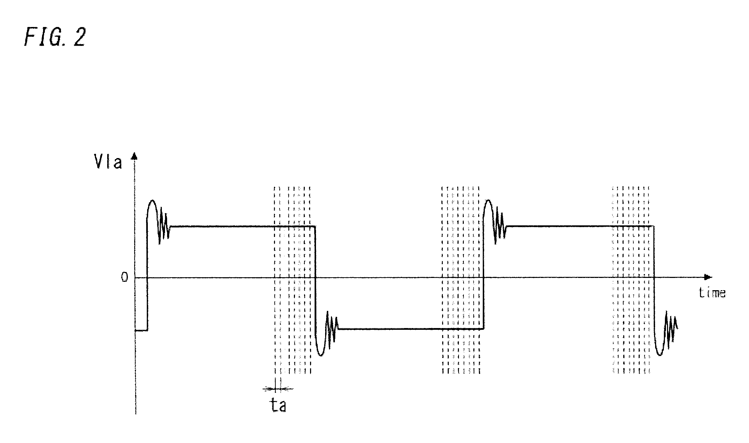

The current target calculation unit **7c** reads the lamp voltage detection value at intervals of a period ta, and stores the read value temporarily. As shown in FIG. 2, the lamp voltage **Vla** developed between the opposite ends of the discharge lamp **La** has a waveform identical to a waveform obtained by inverting the polarity of the output voltage **Vo1** periodically. The current target calculation unit **7c** uses an average of the eight lamp voltage detection values obtained immediately before the timing of the reversal of the polarity to calculate the current target value. This manner is selected for the following reason.

The waveforms of the driving signal **S2** for driving the switching elements **Q2** and **Q5** and the driving signal **S3** for driving the switching elements **Q3** and **Q4** are shown in (a) and (b) of FIG. 3, respectively.

With regard to the driving signals **S2** and **S3,** dead time **td** in which the driving signals **S2** and **S3** have the L level and all the switching elements **Q2** to **Q5** are kept turned off is provided. In the dead time **td,** the lamp current **Ila** becomes zero instantaneously (see FIG. 3 (d)). Hence, the output voltage **Vo1** of the DC/DC converter 1 is increased, and the lamp voltage **Vla** becomes unstable.

In contrast, immediately before the timing of the reversal of the polarity, the lamp voltage **Vla** is stable. Thus, as mentioned above, the current target calculation unit **7c** uses the average of the eight lamp voltage detection values obtained immediately before the timing of the reversal of the polarity to calculate the current target value. Consequently, an accuracy of the current target value can be improved.

Next, the operation of the discharge lamp lighting device **"A"** is explained in detail.

First, when the switch **SW1** is turned on, the discharge lamp lighting device **"A"** is activated. Thereafter, when the switching element **Q1** is turned on, a current is outputted from the DC power source **E1** and flows through the primary winding **N1** of the transformer **Tr1** and the switching element **Q1.** In contrast, the inversely-biased diode **D1** prevents the current from flowing through the secondary winding **N2** of the transformer **Tr1.** Thus, the transformer **Tr1** stores magnetic energy therein. Next, when the switching element **Q1** is turned off, a current flows from the secondary winding **N2** of the transformer **Tr1** to the diode **D1** through the capacitor **C2,** and therefore energy stored in the transformer **Tr1** is transferred to the smoothing capacitor **C2.**

Before the initiation of the discharge lamp **La,** the discharge lamp **La** is in an open state. Hence, a voltage across the capacitor **C2** is increased. While the switching elements **Q2** and **Q5** are kept in an on-state and the switching elements **Q3** and **Q4** are kept in an off-state, a voltage across the capacitor **C3** of the igniter **4** is also increased. When the voltage across the capacitor **C3** reaches a breakdown voltage, the spark gap **SG1** is broken down and a high voltage turn-ratio times as high as the voltage across the primary winding **N11** is induced across the secondary winding **N12** of the transformer **Tr2.** Such a high voltage (about tens kV) is applied to the discharge lamp **La** and then the discharge lamp **La** is broken down.

In response to breakdown of the discharge lamp **La,** a current is supplied from the DC/DC converter **1** to the discharge lamp **La,** and the discharge lamp **La** causes an arc discharge.

Subsequently, turning on and off the set of the switching elements **Q2** and **Q5** and the set of the switching elements **Q3** and **Q4** alternately causes application of an AC voltage to the discharge lamp **La.** Hence, the discharge lamp **La** lights steadily. In this regard, as mentioned above, the DC outputted from the DC/DC converter **1** is controlled by the error signal outputted from the error amplifier **7d** of the controller **7** and a feed-back control is performed such that the lamp power is kept identical to the target value.

When a short circuit or a ground fault occurs on the discharge lamp **La** side (load side), the discharge lamp **"A"** shows the following operation.

When the lamp detection value (see FIG. 2, the average of the eight lamp voltage detection values read immediately before the timing of the reversal of the polarity) is decreased down to a value equal to or less than a predetermined threshold **K1,** the current target calculation unit **7c** of the controller **7** adjusts the current target value to zero, thereby keeping the switching element **Q1** in the off-state.

In other words, when a short circuit or a ground fault occurs on the load side and the lamp voltage detection value is decreased by a greater extent than that in a normal state, the controller **7** terminates the operation of the DC/DC converter **1.** At this time, also the driver control unit **7e** keeps the switching elements **Q2** to **Q5** in the off-state, thereby terminating the operation of the inverter **3.**

This protective function is effective for a case where the discharge lamp **La** is short-circuited or a ground fault resistance is relatively low. Note that, hereinafter, this protective function is referred to as a first protective function.

However, when the ground fault resistance is relatively high, there is a possibility that the lamp voltage detection value is not decreased down to a value equal to or less than the threshold **K1.**

For example, as shown in FIG. 1, when a ground fault occurs at a point **X1** on the first end of the discharge lamp **La** and a ground fault resistance **Rs** is relatively high, a ground fault current **Is** does not flow through the discharge lamp **La.** Consequently, extinction of the discharge lamp **La** occurs.

However, since the lamp voltage detection value is not less than the threshold **K1,** the aforementioned first protective function does not work.

In view of this, the controller **7** has a second protective function using a limitation on a voltage ratio of the lamp voltage. In the second protective function, the controller **7** is configured to perform an abnormality judgment process of judging whether or not abnormality has occurred based on a measured value of a driving voltage defined as an AC voltage applied to the discharge lamp **La.** This controller **7** serves as an abnormality detection device. Note that, in the present embodiment, the controller **7** is configured to acquire the measured value of the AC voltage (driving voltage) applied to the discharge lamp **La** from the voltage detector **2a.** In other words, the controller **7** and the voltage detector **2a** are considered as constituting the abnormality detection device.

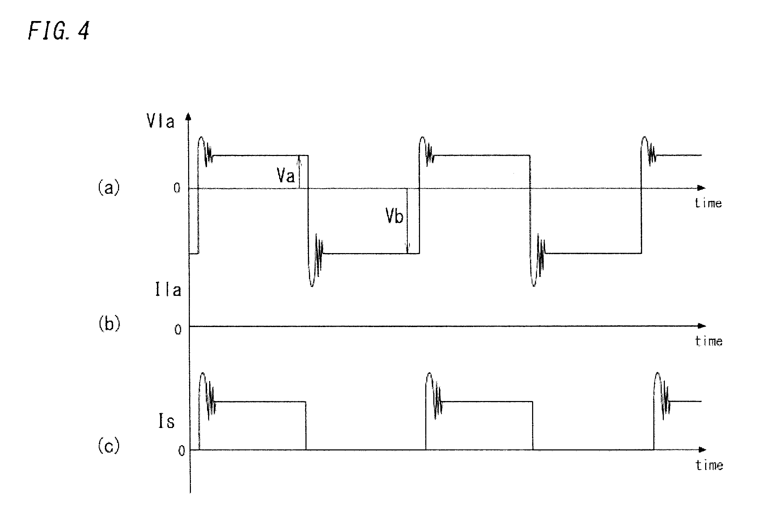

When a ground fault occurs at the point **X1** as shown in FIG. 1, waveforms of the lamp voltage **Vla,** the lamp current **Ila,** and the ground fault current **Is** are illustrated in (a) to (c) of FIG. 4, respectively.

The ground current **Is** flows through an imaginary resistor having the ground fault resistance **Rs,** the igniter **4,** the inverter **3,** the detector **2,** and the capacitor **C2** and reaches only one polarity (positive polarity) of the discharge lamp **La** (see FIG. 4 (c)). When the discharge lamp **La** is extinguished due to the ground fault, no lamp current **Ila** flows (see FIG. 4 (b)).

Thus, only a positive polarity (positive component) of the output current **Io1** is allowed to flow. Therefore, in a period when a negative component of the output current **Io1** does not flow, the controller **7** controls the DC/DC converter **1** to increase the output voltage **Vo1** relative to that in a normal state thereof. Consequently, with regard to the polarity inverting lamp voltage **Vla,** there is a difference between an absolute value **Va** of a voltage value of the positive polarity and an absolute value **Vb** of a voltage value of the negative polarity (negative component) (see FIG. 4 (a)).

In view of this, the current target calculation unit **7c** of the controller **7** acquires information representing the timing of the reversal of the polarity from the driver control unit **7e** and stores the lamp voltage detection values (see FIG. 2, the averages of the eight lamp voltage detection values obtained immediately before the timing of the reversal of the polarity) of the respective positive and negative polarities (components) for each reversal of the polarity.

When a state (asymmetric state) where a difference between the lamp voltage detection value of the positive polarity of the lamp voltage and the lamp voltage detection value of the negative polarity of the lamp voltage around the time of the reversal of the polarity of the lamp voltage is not less than a threshold has occurred over the predetermined period **T1,** the current target calculation unit **7c** concludes that an abnormality such as a ground fault has occurred. Note that, the expression "the state has occurred over the predetermined period **T1"** means "the state has occurred continuously over the predetermined period" and "the state has occurred intermittently within the predetermined period". Besides, the predetermined period has a predetermined time length. The predetermined period **T1** is defined as a period for making the distinction between the occurrence of a temporal state (asymmetric state) due to a cause different from a ground fault and the occurrence of a state (asymmetric state) due to a ground fault.

The controller **7** (the current target calculation unit **7c)** is configured to, in the abnormality judgment process, judge whether or not the asymmetric state in which the driving voltage lacks symmetry has occurred over the predetermined period **T1,** based on the measured value (lamp voltage detection value) obtained from the voltage detector **2a.** In more detail, upon acknowledging that an absolute value of one of a first measured value defined as the measured value (lamp voltage detection value) obtained before a reversal of the polarity of the AC voltage (lamp voltage **Vla)** and a second measured value defined as the measured value (lamp voltage detection value) obtained after the reversal of the polarity of the AC voltage is greater than an absolute value of the other of the first measured value and the second measured value, the controller **7** (the current target calculation unit **7c)** conclude that the asymmetric state has occurred.

Upon concluding that the asymmetric state has occurred over the predetermined period **T1,** the controller **7** concludes that the abnormality has occurred.

The controller **7** (the current target calculation unit **7c)** is configured to, upon concluding that the abnormality has occurred, decrease power supplied to the discharge lamp **La** down to a predetermined value.

For example, the predetermined value is zero. In brief, the controller **7** (the current target calculation unit **7c)** terminates supply of power to the discharge lamp **La.** In this case, the controller **7** (the current target calculation unit **7c)** terminates the operation of the lighting circuit unit **10.**

For example, the current target calculation unit **7c** distinguishes between the lamp voltage detection value of the first polarity having a less absolute value and the lamp voltage detection value of the second polarity having a greater absolute value with regard to the lamp voltage detection values of the polarities obtained before and after the reversal of the polarity. Thereafter, the current target calculation unit **7c** calculates a voltage proportion **D** representing a proportion of the absolute value of the lamp voltage detection value of the second polarity to the absolute value of the lamp voltage detection value of the first polarity. When a state where the voltage proportion **D** is kept not less than (is kept equal to or more than) the threshold (first threshold) **K1** has occurred over the predetermined period **T1,** the current target calculation unit **7c** concludes that the abnormality has occurred. This threshold **K1** is selected to satisfy the condition of "**K1** > **1**".

In other words, the controller **7** (the current target calculation unit **7c)** calculates the proportion (voltage proportion) **D of a** larger one of the absolute values of the respective first and second measured values to a smaller one of the absolute values of the respective first and second measured values in the abnormality judgment process. Upon acknowledging that the proportion (voltage proportion) **D** is not less than the threshold (first threshold) **K1,** the controller **7** (the current target calculation unit **7c)** concludes that a predetermined condition (abnormality judgment condition) has been fulfilled.

Further, upon acknowledging that the asymmetric state continues over the predetermined period, the controller **7** (the current target calculation unit **7c)** concludes that the asymmetric state has occurred over the predetermined period. In brief, upon acknowledging that the asymmetric state occurs continuously over the predetermined period, the controller **7** concludes that the abnormality has occurred.

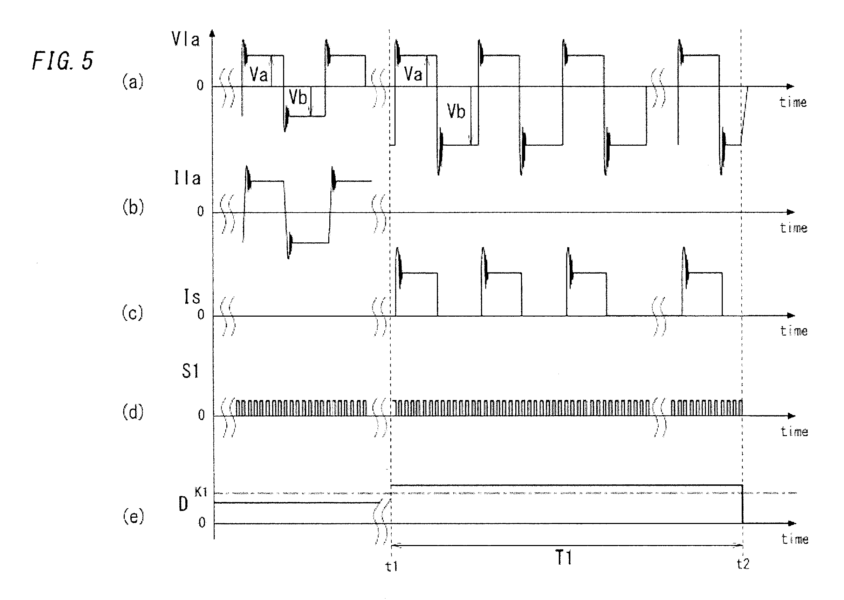

For example, when the waveforms of charts (a) to (e) in FIG. 5 are taken as an instance, a short circuit and a ground fault on the load side are not observed before a time point **t1.** Hence, the lamp voltage **Vla** is induced to have symmetry between the positive polarity and the negative polarity. The absolute value **Va** of the positive polarity of the lamp voltage detection value and the absolute value **Vb** of the negative polarity of the lamp voltage detection value subsequent to this positive polarity have the substantially same value, and therefore the voltage proportion **D** is equal to one. Since the voltage proportion **D** is equal to one and less than the threshold **K1,** the current target calculation unit **7c** concludes that no abnormality has occurred.

Further, before the time point **t1,** the lamp current **Ila** flows through the discharge lamp **La** and the ground fault current **Is** does not occur. Furthermore, the switching element **Q1** is turned on and off in response to the driving signal **S1,** and the DC/DC converter **1** is in operation.

Next, it is assumed that a ground fault occurs at the point **X1** at the time point **t1** and then a state where the ground fault resistance **Rs** is relatively high occurs (see FIG. 1). After the time point **t1,** the ground fault current **Is** is generated only at the positive polarity. Consequently, the lamp voltage **Vla** lacking symmetry between the positive polarity and the negative polarity is generated. Hence, with regard to the lamp voltage detection values, the absolute value **Va** becomes less than the absolute value **Vb,** and the voltage proportion **D** = **Vb** / **Va** is obtained.

As mentioned above, the current target calculation unit **7c** calculates the proportion (voltage proportion) **D** = **Vb / Va** of a larger one (absolute value **Vb)** of the absolute values **Va** and **Vb** of the respective first and second measured values to a smaller one (absolute value **Va)** of the absolute values **Va** and **Vb** of the respective first and second measured values.

When the state (asymmetric state) in which the voltage proportion **D** = **Vb** / **Va** is not less than the threshold **K1** has occurred over the predetermined period **T1,** the current target calculation unit **7c** concludes that the abnormality has occurred. Note that, when the absolute value **Va** is greater than the absolute value **Vb,** the voltage proportion **D** is given by **D** = **Va / Vb.**

After the current target calculation unit **7c** concludes at a time point **t2** that the abnormality has occurred, the current target calculation unit **7c** adjusts the current target value to zero, and terminates the output of the driving signal **S1** to the switching element **Q1** to terminate the operation of the DC/DC converter **1.**

At this time, also the driver control unit **7e** keeps the switching elements **Q2** to **Q5** in the off-state to terminate the operation of the inverter **3.** Consequently, it is possible to prevent the occurrence of an undesired situation where the ground fault current **Is** continues to flow through the circuit in spite of extinction of the discharge lamp **La.**

According to the above configuration, even when the first protective function does not work due to relatively high ground fault resistance **Rs,** the ground fault can be detected by the second protective function. In other words, even when the first protective function does not work in response to the occurrence of the ground fault, the circuit operation is terminated by the second protective function. Therefore, a loss of circuits and a stress of components can be suppressed and the circuit destruction can be prevented.

Note that, the threshold **K1** is selected from a range of the voltage proportion which cannot be obtained in a steady lighting state of the discharge lamp **La,** and is set to a particular value of the voltage proportion obtained in only the load abnormality state.

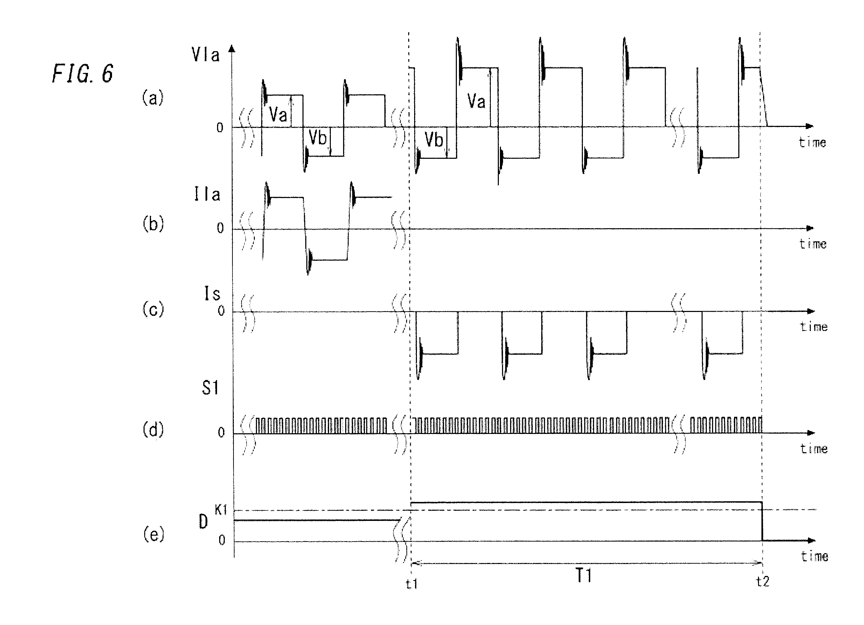

When a situation where a ground fault occurs at a point **X2** on the second terminal side of the discharge lamp **La** and the ground fault resistance **Rs** is relatively high has occurred (see FIG. 1), the waveforms at particular portions of the present circuit are illustrated in charts (a) to (e) of FIG. 6 respectively.

**In** this regard, the ground fault current **Is** is generated only at the other polarity (negative polarity). Consequently, the lamp voltage **Vla** lacking symmetry between the positive polarity and the negative polarity is generated. Hence, with regard to the lamp voltage detection values, the absolute value **Va** becomes greater than the absolute value **Vb,** and the voltage proportion **D** = **Va** / **Vb** is obtained.

As mentioned above, the current target calculation unit **7c** calculates the proportion (voltage proportion) **D** = **Va** / **Vb** of a larger one (absolute value **Va)** of the absolute values **Va** and **Vb** of the respective first and second measured values to a smaller one (absolute value **Vb)** of the absolute values **Va** and **Vb** of the respective first and second measured values.

When the state (asymmetric state) in which the voltage proportion **D** = **Va** / **Vb** is not less than the threshold **K1** has occurred over the predetermined period **T1,** the current target calculation unit **7c** concludes that the abnormality has occurred.

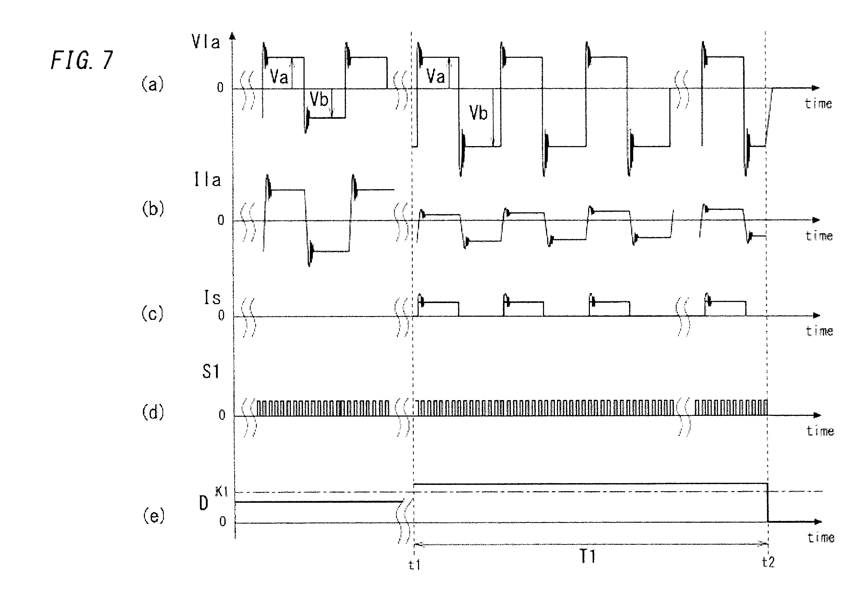

Further, charts (a) to (e) of FIG. 5 show the waveforms at the portions of the present circuit in a situation where the discharge lamp **La** is extinguished due to a ground fault. In contrast, charts (a) to (e) of FIG. 7 show the waveforms at the portions of the present circuit in a situation where the discharge lamp **La** is not extinguished even when a ground fault occurs. When the discharge lamp **La** is not extinguished even when a ground fault occurs, the lamp current **Ila** continues to flow. However, even when the lamp current **Ila** flows, the occurrence of the abnormality can be detected as long as the lamp voltage **Vla** shows asymmetry between the positive polarity and the negative polarity and the voltage proportion **D** becomes not less than the threshold **K1.**

The ground fault resistance **Rs** is not limited to a particular value, but may be 10 Ω, 30 Ω, or 1 kΩ. The discharge lamp lighting device **"A"** of the present embodiment can be applied as long as the voltage proportion **D** becomes not less than the threshold **K1** at the time of occurrence of a ground fault.

The aforementioned second protective function of the discharge lamp lighting device **"A"** also can detect, in addition to a ground fault with the relatively high ground fault resistance, another load abnormality in which the lamp voltage detection value is not decreased equal to or less than the threshold **K1,** and terminate the circuit operation.

Especially, in the present embodiment, the threshold **K1** is selected to be not less than 1.5.

For example, as shown in FIG. 4(a) to (c), the lamp current **Ila** does not flow due to a ground fault at the point **X1,** and the discharge lamp **La** is extinguished, and the ground fault current **Is** having the positive polarity occurs. In this situation, when the absolute value **Va** of the positive polarity is 40 V and the absolute value **Vb** of the negative polarity is 60 V, the voltage proportion **D** of the lamp voltage **Vla** is expressed by **D** = 60 / 40 = 1.5.

Since the voltage proportion **D** = 1.5 is not less than the threshold **K1** = 1.5, the current target calculation unit **7c** concludes that the abnormality has occurred. Thus, the current target calculation unit **7c** terminates the operation of the DC/DC converter **1** and the operation of the inverter **3.** Consequently, it is possible to prevent the occurrence of an undesired situation where the ground fault current **Is** continues to flow through the circuit in spite of extinction of the discharge lamp **La.**

In this embodiment, the threshold (first threshold) **K1** is selected to be equal to or more than **1.5.** Thus, the false operation of terminating the circuit operation in response to the false detection of the abnormality while the abnormality (e.g., a short circuit and a ground fault) has not occurred is prevented. Further, even in the end of life of the discharge lamp **La,** the possibility that the voltage proportion **D** is equal to or more than 1.5 is extremely low except the oscillation occurs. Hence, the false detection of the abnormality can be prevented. In brief, with selecting the threshold **K1** to be not less than 1.5, it is possible to prevent the false operation of terminating the circuit operation in the normal lighting state. Note that, in the present embodiment, the lower limit of the threshold **K1** is 1.5 but the upper limit of the threshold **K1** is not limited to a particular value. The upper limit of the threshold **K1** is selected appropriately to enable detection of an abnormality caused by a ground fault.

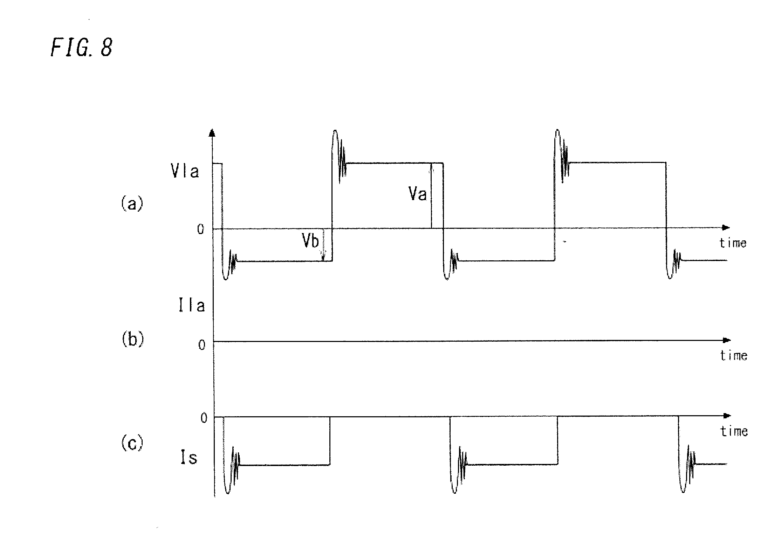

Moreover, as shown in charts (a) to (c) of FIG. 8, for example, the lamp current **Ila** does not flow due to a ground fault at the point **X2,** and the discharge lamp **La** is extinguished, and the ground fault current **Is** having the negative polarity occurs. When the absolute value **Va** of the positive polarity of the lamp voltage **Vla** is 60 V and the absolute value **Vb** of the negative polarity of the lamp voltage **Vla** is 40 V, the voltage proportion **D** is expressed by **D** = 60 / 40 = 1.5. Also in this case, since the voltage proportion **D** = 1.5 is not less than the threshold **K1** = 1.5, the current target calculation unit **7c** concludes that the abnormality has occurred. As a result, the operations of the DC/DC converter **1** and the inverter **3** can be terminated.

Further, in the present embodiment, the predetermined period **T1** is selected to be not less than **10** seconds.

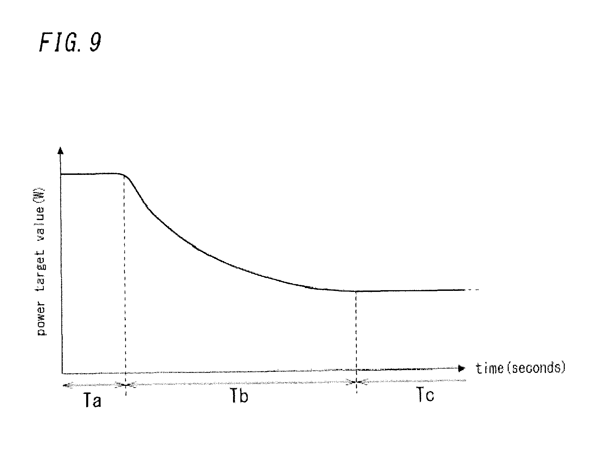

FIG. 9 shows the power target values selected by the maximum power limitation unit **7b** of the controller **7.** Before the state of the discharge lamp **La** reaches the stable lighting state from a state of starting to emit the luminous flux after the preheating period, time passes through a period **Ta,** a period **Tb,** and a period **Tc** in this order.

In the period **Ta,** since the electrodes of the discharge lamp **La** are not heated enough, there is a possibility of extinction of the discharge lamp **La.** Further, to rapidly increase the luminous flux of the discharge lamp **La,** the power target value is selected to be relatively high lamp power (the maximum power target value, e.g., 78 W). The start-up period **Ta** in which this maximum power target value is maintained has a length in a range of about 5 to 10 seconds.

Thereafter, in the period **Tb,** the power target value is gradually decreased down to rated power of the discharge lamp **La.**

Subsequently, in the period **Tc,** the power target value is kept identical to the rated power (e.g., 35 W) of the discharge lamp **La.**

In the period **Ta,** even when the abnormality (e.g., a short circuit and a ground fault) has not occurred, the lamp voltage **Vla** is likely to have asymmetry between the positive polarity and the negative polarity, and the voltage proportion **D** also tends to be increased. In view of this, with selecting the predetermined period **T1** to be not less than **10** seconds, the termination of the circuit operation can be prevented even in the state of starting to emit the luminous flux in which the voltage proportion **D** tends to be increased.

Note that, in the present embodiment, the lower limit of the predetermined period **T1** is 10 seconds but the upper limit of the predetermined period **T1** is not limited to a particular value. The upper limit of the predetermined period **T1** is selected appropriately to enable detection of an abnormality caused by a ground fault.

Additionally, when the abnormality is detected by the second protective function at the time of occurrence of a ground fault, the current target calculation unit **7c** of the present embodiment decreases the DC output from the DC/DC converter **1** down to predetermined power.

In brief, upon concluding that the abnormality has occurred, the controller **7** decreases power supplied to the discharge lamp **La** down to a predetermined value. In this regard, the controller **7** gradually decreases the power supplied to the discharge lamp **La.** In other words, upon concluding that the abnormality has occurred, the controller **7** controls the lighting circuit unit **10** in such a manner to gradually decrease power supplied to the discharge lamp **La** such that the power supplied to the discharge lamp **La** becomes identical to a predetermined value after a passage of a predetermined decrease period. Note that, the predetermined decrease period is appropriately selected.

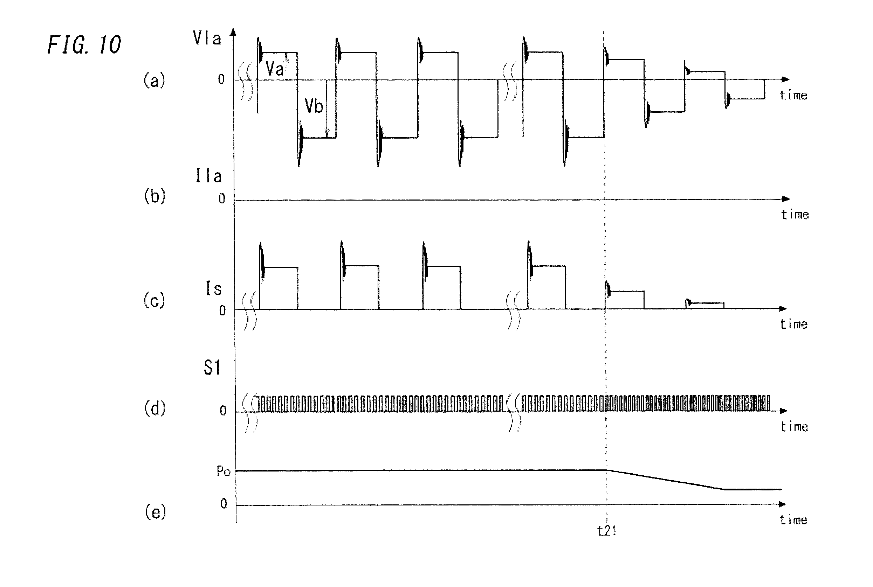

For example, as shown in charts (a) to (e) of FIG. 10, the lamp current **Ila** does not flow due to a ground fault at the point **X1,** and the discharge lamp **La** is extinguished, and the ground fault current Is having the positive polarity occurs. In this situation, the lamp voltage **Vla** has asymmetry between the absolute value **Va** of the voltage value of the positive polarity and the absolute value **Vb** of the voltage value of the negative polarity. When the current target calculation unit **7c** concludes, based on the voltage proportion **D** (or a voltage difference **F** mentioned below), that the abnormality has occurred (time point **t21),** the current target calculation unit **7c** gradually decreases the current target value.

Consequently, the duty cycle of the driving signal **S1** provided to the switching element **Q1** is decreased gradually, and, for example, the DC output Po from the DC/DC converter **1** is gradually decreased from 35 W down to 26 W. Throughout this operation, the driver control unit **7e** drives the switching elements **Q2** to **Q5** to continue the operation of the inverter **3.** Note that, values (predetermined values) before and after a gradual decrease in the DC output Po may be selected appropriately, and are not limited to particular values. For example, the predetermined value may be zero or more. When the predetermined value is zero, the controller **7** may decrease power supplied to the discharge lamp **La** down to a certain value and subsequently terminate the operation of the lighting circuit unit **10.**

Hence, when a ground fault occurs, the DC output Po from the DC/DC converter **1** is gradually decreased, and the ground fault current **Is** also is decreased. Therefore, a loss of circuits and a stress of components can be suppressed and the circuit destruction can be prevented.

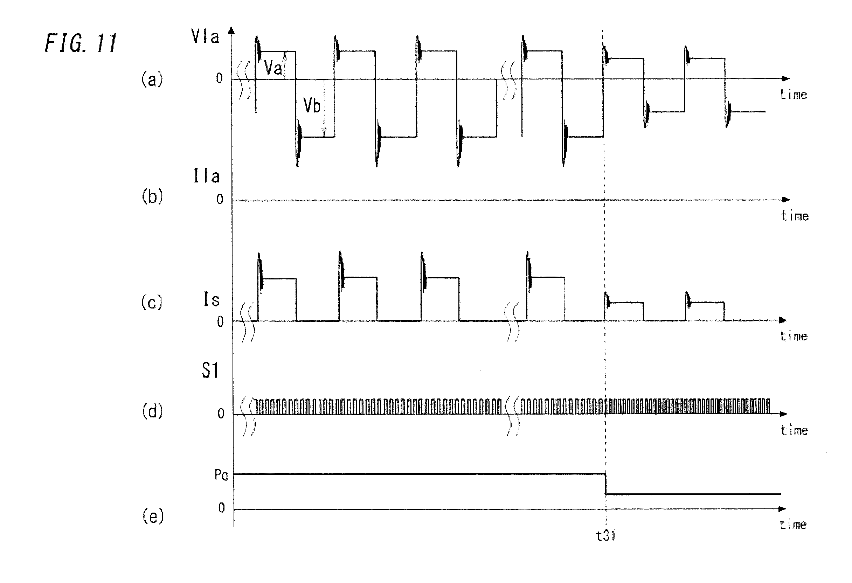

Alternatively, as shown in charts (a) to (e) of FIG. 11, upon acknowledging based on the voltage proportion **D** that the abnormality has occurred (time point **t31),** the current target calculation unit **7c** may decrease the current target value in a stepwise manner. In this arrangement, the DC output Po from the DC/DC converter **1** is decreased in a stepwise manner.

Note that, the controller **7** does not necessarily need to decrease power supplied to the discharge lamp **La** gradually. Hence, upon concluding that the abnormality has occurred, the controller **7** may decrease power supplied to the discharge lamp La down to a predetermined value immediately. In this modification, the controller **7** may immediately terminate the operation of the lighting circuit unit **10** upon concluding that the abnormality has occurred.

Additionally, the discharge lamp lighting device **"A"** of the present embodiment enables the second protective function using the voltage proportion **D** after the state of the discharge lamp **La** is changed from the state in the start-up period to the state in the steady lighting period.

With regard to FIG. 9, the periods **Ta** and **Tb** are start-up periods, and the period **Tc** is the steady lighting period. The controller **7** activates the second protective operation after the state of the discharge lamp **La** is changed from the state in the start-up periods **Ta** and **Tb** to the state in the steady lighting period **Tc.**

In this manner, the second protective function using the voltage proportion **D** is not activated in the start-up periods **Ta** and **Tb** in which the lamp voltage **Vla** fluctuates greatly. Consequently, it is possible to prevent the false operation of terminating the circuit operation in response to the false detection of the abnormality in the start-up periods **Ta** and **Tb.**

As mentioned above, the discharge lamp lighting device **"A"** of the present embodiment includes the power converter (DC/DC converter) **1,** the inverter **3,** the voltage detector **2a,** the current detector **2b,** and the controller **7.** The DC/DC converter **1** converts inputted power into desired DC power. The inverter **3** converts a DC voltage outputted from the power converter **1** into an AC voltage, and outputs the resultant AC voltage to the discharge lamp **La.** The voltage detector **2a** detects a voltage supplied to the discharge lamp **La.** The current detector **2b** detects a current supplied to the discharge lamp **La.** The controller **7** adjusts DC power outputted from the power converter **1** based on the voltage detection value of the voltage detector **2a** and the current detection value of the current detector **2b.** The controller **7** stores the voltage detection values of the respective polarities for each reversal of the polarity of the AC voltage. When a state where a difference not less than the threshold occurs between the voltage detection value of one polarity and the voltage detection value of the other polarity respectively obtained before and after the reversal of the polarity has occurred over the predetermined period, the controller **7** concludes that the abnormality has occurred.

Further, in the discharge lamp lighting device **"A"** of the present embodiment, the controller **7** distinguishes between the lamp voltage detection value of the first polarity having a less absolute value and the lamp voltage detection value of the second polarity having a greater absolute value with regard to the lamp voltage detection values of the polarities obtained before and after the reversal of the polarity. The controller calculates the voltage proportion representing the proportion of the absolute value of the lamp voltage detection value of the second polarity to the absolute value of the lamp voltage detection value of the first polarity. When a state where the voltage proportion is kept not less than the threshold has occurred over the predetermined period, the controller **7** concludes that the abnormality has occurred.

Further, in the discharge lamp lighting device **"A"** of the present embodiment, the threshold (first threshold) **K1** is not less than 1.5.

Further, in the discharge lamp lighting device **"A"** of the present embodiment, the predetermined period **T1** has a predetermined time length.

Further, in the discharge lamp lighting device **"A"** of the present embodiment, the predetermined period **T1** is not less than 10 seconds.

Further, in the discharge lamp lighting device **"A"** of the present embodiment, the controller **7** terminates supplying power to the discharge lamp **La** or decreases power supplied to the discharge lamp **La** when concluding that the abnormality has occurred.

Further, in the discharge lamp lighting device **"A"** of the present embodiment, the controller **7** gradually decreases power supplied to the discharge lamp **La** when concluding that the abnormality has occurred.

Further, in the discharge lamp lighting device **"A"** of the present embodiment, the controller **7** performs a process of detecting the abnormality after the state of the discharge lamp **La** is changed from the state in the start-up period to the state in the steady lighting period.

In other words, the discharge lamp lighting device **"A"** of the present embodiment includes the following first to twelfth features. Note that, the second to twelfth features are optional.

As for the first feature, the discharge lamp lighting device **"A"** of the present embodiment includes the controller **7** configured to perform the abnormality judgment process of judging whether or not the abnormality has occurred, based on the measured value of the driving voltage defined as the AC voltage applied to the discharge lamp **La.** The controller **7** is configured to, in the abnormality judgment process, judge whether or not the asymmetric state in which the driving voltage lacks symmetry has occurred over the predetermined period **T1.** The controller **7** is configured to, upon concluding that the asymmetric state has occurred over the predetermined period **T1,** conclude that the abnormality has occurred.

As for the second feature, in addition to the first feature, the controller **7** is configured to, upon acknowledging that the absolute value of one of the first measured value defined as the measured value obtained before a reversal of polarity of the driving voltage and the second measured value defined as the measured value obtained after the reversal of polarity of the driving voltage is greater than the absolute value of the other of the first measured value and the second measured value, conclude that the asymmetric state has occurred.

As for the third feature, in addition to the second feature, the controller **7** is configured to, in the abnormality judgment process, calculate the proportion (voltage proportion) **D** of a larger one of the absolute values of the respective first and second measured values to a smaller one of the absolute values of the respective first and second measured values and, upon acknowledging that the proportion **D** is not less than the threshold (first threshold) **K1,** conclude that the asymmetric state has occurred.

As for the fourth feature, in addition to the third feature, the threshold (first threshold) **K1** is not less than **1.5.**

As for the fifth feature, in addition to any one of the first to fourth features, the controller **7** is configured to, upon acknowledging that the state (asymmetric state) continues for the predetermined period **T1,** conclude that the state (asymmetric state) has occurred over the predetermined period **T1.**

As for the sixth feature, in addition to the fifth feature, the predetermined period **T1** has a length equal to that of the start-up period **Ta** of the discharge lamp **La.**

As for the seventh feature, in addition to the fifth or sixth feature, the predetermined period **T1** has a length not less than **10** seconds.

As for the eighth feature, in addition to any one of the first to seventh features, the discharge lamp lighting device **"A"** further includes the lighting circuit unit **10** having a function of applying an AC voltage to the discharge lamp **La.** The controller **7** is configured to control the lighting circuit unit **10** to adjust power supplied to the discharge lamp **La.**

As for the ninth feature, in addition to the eighth feature, the lighting circuit unit **10** includes the power converter **1,** the inverter **3,** the voltage detector **2a,** and the current detector **2b.** The power converter 1 is configured to generate DC power by use of power from an external power source (e.g., the DC power source **E1**). The inverter **3** is configured to apply an AC voltage to the discharge lamp **La** by use of the DC power generated by the power converter **1.** The voltage detector **2a** is configured to measure a voltage (lamp voltage **Vla)** applied to the discharge lamp **La.** The current detector **2b** is configured to measure a current (lamp current **Ila)** flowing through the discharge lamp **La.** The controller **7** is configured to adjust the DC power generated by the power converter **1** based on a measured value of the voltage detector **2a** and a measured value of the current detector **2b.**

As for the tenth feature, in addition to the eighth or ninth feature, the controller **7** is configured to, upon concluding that the abnormality has occurred, decrease power supplied to the discharge lamp **La** down to a predetermined value.

As for the eleventh feature, in addition to the tenth feature, the controller **7** is configured to gradually decrease power supplied to the discharge lamp **La.**

As for the twelfth feature, in addition to any one of the first to eleventh features, the controller **7** is configured to start the abnormality judgment process after the discharge lamp **La** is changed from the state in the start-up period to the state in the steady lighting period.

As explained above, even when a ground fault occurs with a relatively high ground fault resistance, the discharge lamp lighting device **"A"** of the present embodiment can detect such a ground fault. In other words, since the circuit operation is terminated in response to a ground fault, a loss of circuits and a stress of components can be suppressed and the circuit destruction can be prevented.

### (SECOND EMBODIMENT)

In the present embodiment, the controller **7** has the second protective function using a voltage difference limitation of the lamp voltage. Besides, the present embodiment includes the other configurations same as those of the first embodiment, and such configurations are designated by the same reference numerals, and explanations thereof are deemed unnecessary.

The current target calculation unit **7c** of the controller **7** calculates a voltage difference **F** representing a difference between the absolute value of the lamp voltage detection value of the first polarity and the absolute value of the lamp voltage detection value of the second polarity. When a state where the voltage difference **F** is kept not less than (is kept equal to or more than) a threshold (second threshold) **K2** has occurred over a predetermined period **T2,** the current target calculation unit **7c** concludes that the abnormality has occurred. This threshold (second threshold) **K2** is selected to satisfy the condition of **"K2** > 0".

In other words, the controller **7** (the current target calculation unit **7c)** calculates the difference (voltage difference) **F** between the absolute values of the respective first and second measured values in the abnormality judgment process. Upon acknowledging that the difference (voltage difference) **F** is not less than the threshold (second threshold) **K2,** the controller **7** (the current target calculation unit **7c)** concludes that the asymmetric state has occurred.

Further, like the first embodiment, upon acknowledging that the asymmetric state continues over the predetermined period **T2,** the controller **7** (the current target calculation unit **7c)** concludes that the asymmetric state has occurred over the predetermined period **T2.** In brief, upon acknowledging that the asymmetric state occurs continuously over the predetermined period **T2,** the controller **7** concludes that the abnormality has occurred.

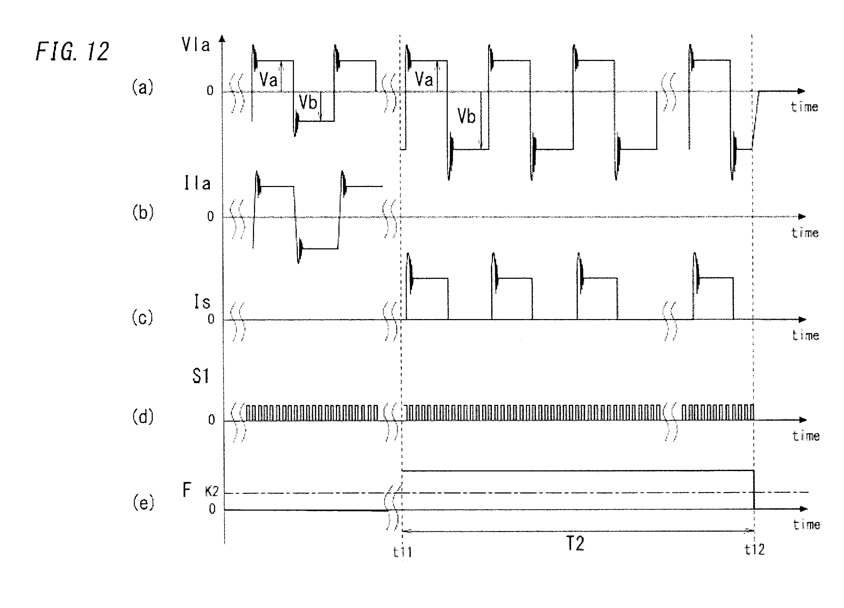

For example, when the waveforms of charts (a) to (e) in FIG. 12 are taken as an instance, a short circuit and a ground fault on the load side are not observed before a time point **t11**. Hence, the lamp voltage **Vla** is induced to have symmetry between the positive polarity and the negative polarity. The absolute value **Va** of the positive polarity of the lamp voltage detection value and the absolute value **Vb** of the negative polarity of the lamp voltage detection value subsequent to this positive polarity have the substantially same value, and therefore the voltage difference **F** is expressed as **F** = |**Vb** - **Va|** = 0. Since the voltage difference **F** is equal zero and less than the threshold **K2,** the current target calculation unit **7c** concludes that no abnormality has occurred.

Further, before the time point **t11,** the lamp current **Ila** flows through the discharge lamp **La** and the ground fault current **Is** does not occur. Furthermore, the switching element **Q1** is turned on and off in response to the driving signal **S1,** and the DC/DC converter **1** is in operation.

Next, it is assumed that a ground fault occurs at the point **X1** at the time point **t11** and then a state where the ground fault resistance **Rs** is relatively high occurs (see FIG. **1**). After the time point **t11,** the ground fault current Is is generated only at the positive polarity. Consequently, the lamp voltage **Vla** lacking symmetry between the positive polarity and the negative polarity is generated. Hence, with regard to the lamp voltage detection values, the absolute value **Va** becomes less than the absolute value **Vb,** and the voltage difference **F** = |**Vb - Va**| > 0 is obtained.

As mentioned above, the current target calculation unit **7c** calculates the difference (voltage difference) **F** between the absolute values **Va** and **Vb** of the respective first and second measured values.

When the state (asymmetric state) in which the voltage difference **F** = |**Vb** - **Va**| is not less than the threshold **K2** has occurred over the predetermined period **T2,** the current target calculation unit **7c** concludes that the abnormality has occurred.

After the current target calculation unit **7c** concludes at a time point **t12** that the abnormality has occurred, the current target calculation unit **7c** adjusts the current target value to zero, and terminates the output of the driving signal **S1** to the switching element **Q1** to terminate the operation of the DC/DC converter **1.**

At this time, also the driver control unit **7e** keeps the switching elements **Q2** to **Q5** in the off-state to terminate the operation of the inverter **3.** Consequently, it is possible to prevent the occurrence of an undesired situation where the ground fault current **Is** continues to flow through the circuit in spite of extinction of the discharge lamp **La.**

According to the above configuration, even when the first protective function does not work due to relatively high ground fault resistance **Rs,** the ground fault can be detected by the second protective function. In other words, even when the first protective function does not work in response to the occurrence of the ground fault, the circuit operation is terminated by the second protective function. Therefore, a loss of circuits and a stress of components can be suppressed and the circuit destruction can be prevented.

Note that, the threshold **K2** is selected from a range of the voltage proportion which cannot be obtained in a steady lighting state of the discharge lamp La, and is set to a particular value of the voltage proportion obtained in only the load abnormality state.

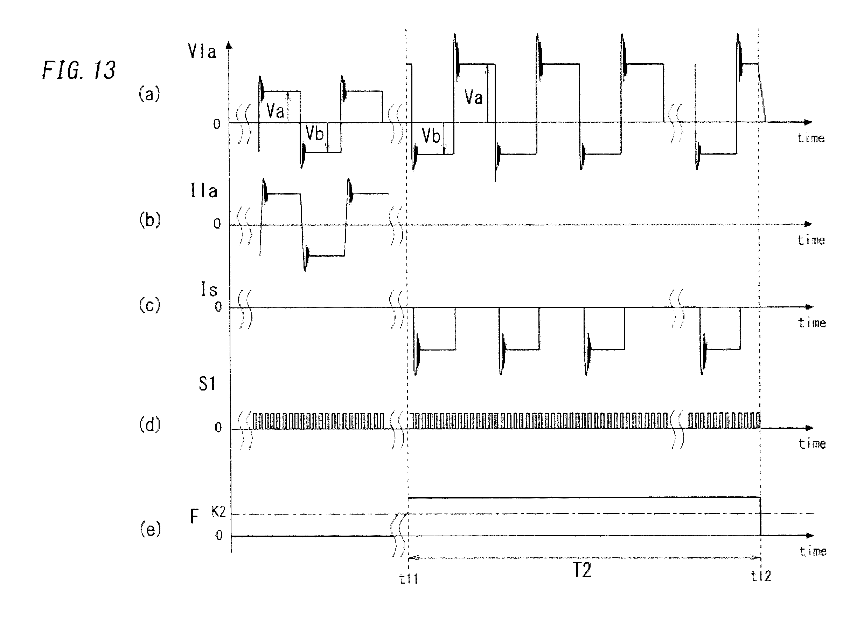

When a situation where a ground fault occurs at the point **X2** on the second terminal side of the discharge lamp **La** and the ground fault resistance **Rs** is relatively high has occurred (see FIG. 1), the waveforms at particular portions of the present circuit are illustrated in charts (a) to (e) of FIG. 13 respectively.

In this regard, the ground fault current **Is** is generated only at the other polarity (negative polarity). Consequently, the lamp voltage **Vla** lacking symmetry between the positive polarity and the negative polarity is generated. Hence, with regard to the lamp voltage detection values, the absolute value **Va** becomes greater than the absolute value **Vb,** and the voltage difference **F** = |**Va** - **Vb**| > 0 is obtained.

As mentioned above, the current target calculation unit **7c** calculates the difference (voltage difference) **F** between the absolute values **Va** and **Vb** of the respective first and second measured values.

When the state (asymmetric state) in which the voltage difference **F** = |**Vb** - **Va**| is not less than the threshold **K2** has occurred over the predetermined period **T2,** the current target calculation unit **7c** concludes that the abnormality has occurred.

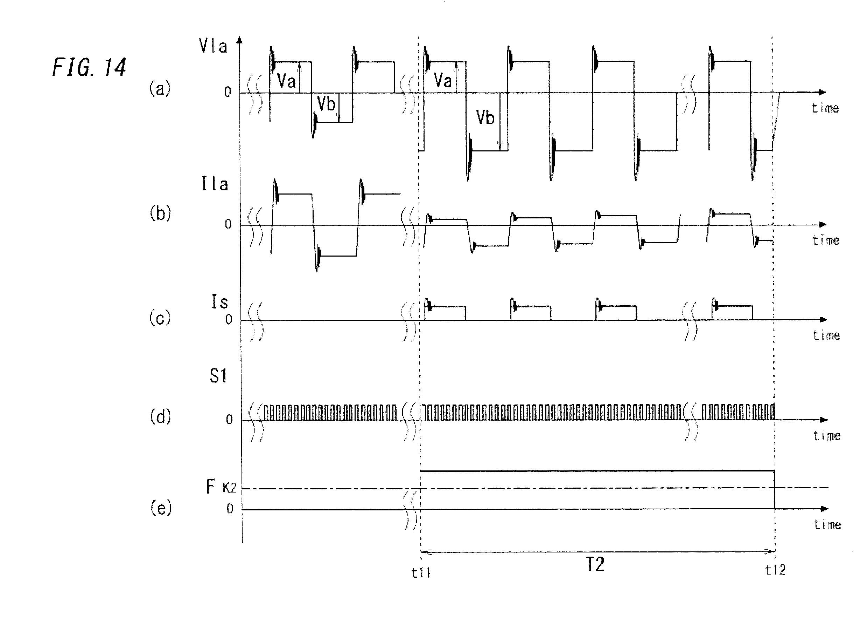

Further, charts (a) to (e) of FIG. 12 show the waveforms at the portions of the present circuit in a situation where the discharge lamp **La** is extinguished due to a ground fault. In contrast, charts (a) to (e) of FIG. 14 show the waveforms at the portions of the present circuit in a situation where the discharge lamp **La** is not extinguished even when a ground fault occurs. When the discharge lamp **La** is not extinguished even when a ground fault occurs, the lamp current **Ila** continues to flow. However, even when the lamp current **Ila** flows, the occurrence of the abnormality can be detected as long as the lamp voltage **Vla** shows asymmetry between the positive polarity and the negative polarity and the voltage difference **F** = |**Vb** - **Va**| becomes not less than the threshold **K2.**

The ground fault resistance **Rs** is not limited to a particular value, but may be 10 Ω, 30 Ω, or 1 kΩ. The discharge lamp lighting device **"A"** of the present embodiment can be applied as long as the voltage difference **F** becomes not less than the threshold **K2** at the time of occurrence of a ground fault.

In the present embodiment, the threshold **K2** is selected to be not less than one-half of the rated lamp voltage (rated voltage) of the discharge lamp **La.**

For example, as shown in FIG. 4(a) to (c), the lamp current **Ila** does not flow due to a ground fault at the point **X1,** and the discharge lamp **La** is extinguished, and the ground fault current **Is** having the positive polarity occurs. In this situation, when the absolute value **Va** of the positive polarity is 40 V and the absolute value **Vb** of the negative polarity is 60 V, the voltage difference **F** of the lamp voltage **Vla** is expressed by **F** = |60 - 40| = 20 V.

In this regard, the rated voltage of the discharge lamp **La** is 40 V, and the threshold **K2** is 20 V which is one-half of the rated voltage of 40 V. Since the voltage difference **F** = 20 V is not less than the threshold **K2** = 20 V, the current target calculation unit **7c** concludes that the abnormality has occurred. Thus, the current target calculation unit **7c** terminates the operation of the DC/DC converter **1** and the operation of the inverter **3.** Consequently, it is possible to prevent the occurrence of an undesired situation where the ground fault current **Is** continues to flow through the circuit in spite of extinction of the discharge lamp **La.**

In this embodiment, the threshold (second threshold) **K2** is set to 20 V which is one-half of the rated voltage of the discharge lamp **La.** Thus, the false operation of terminating the circuit operation in response to the false detection of the abnormality while the abnormality (e.g., a short circuit and a ground fault) has not occurred is prevented. Further, even in the end of life of the discharge lamp **La,** the possibility that the voltage difference **F** is equal to or more than 20 V is extremely low except the oscillation occurs. Hence, the false detection of the abnormality can be prevented. In brief, with selecting the threshold **K2** to be not less than 20 V, it is possible to prevent the false operation of terminating the circuit operation in the normal lighting state. Note that, in the present embodiment, the lower limit of the threshold **K2** is identical to one-half of the rated voltage of the discharge lamp **La** but the upper limit of the threshold **K2** is not limited to a particular value. The upper limit of the threshold **K2** is selected appropriately to enable detection of an abnormality caused by a ground fault.

Moreover, as shown in charts (a) to (c) of FIG. 8, for example, the lamp current **Ila** does not flow due to a ground fault at the point **X2,** and the discharge lamp **La** is extinguished, and the ground fault current **Is** having the negative polarity occurs. When the absolute value **Va** of the positive polarity of the lamp voltage **Vla** is 60 V and the absolute value **Vb** of the negative polarity of the lamp voltage **Vla** is 40 V, the voltage difference **F** is expressed by **F** = |60 - 40| = 20 V. Also in this case, since the voltage difference **F** = 20 V is not less than the threshold **K2** = 20 V, the current target calculation unit **7c** concludes that the abnormality has occurred. As a result, the operation of the DC/DC converter **1** and the operation of the inverter 3 can be terminated.

Further, in the present embodiment, the predetermined period **T2** is selected to be not less than **10** seconds.

In the start-up period **Ta,** even when the abnormality (e.g., a short circuit and a ground fault) has not occurred, the lamp voltage **Vla** is likely to have asymmetry between the positive polarity and the negative polarity, and the voltage difference **F** also tends to be increased. In view of this, with selecting the predetermined period **T2** to be not less than **10** seconds, the termination of the circuit operation can be prevented even in the state of starting to emit the luminous flux in which the voltage difference **F** tends to be increased.

Note that, in the present embodiment, the lower limit of the predetermined period **T2** is **10** seconds but the upper limit of the predetermined period **T2** is not limited to a particular value. The upper limit of the predetermined period **T2** is selected appropriately to enable detection of an abnormality caused by a ground fault.

Additionally, when the abnormality is detected by the second protective function at the time of occurrence of a ground fault, the current target calculation unit **7c** of the present embodiment decreases the DC output from the DC/DC converter **1** down to predetermined power.

For example, as shown in charts (a) to (e) of FIG. 10, the lamp current **Ila** does not flow due to a ground fault at the point **X1,** and the discharge lamp **La** is extinguished, and the ground fault current Is having the positive polarity occurs. In this situation, the lamp voltage **Vla** has asymmetry between the absolute value **Va** of the voltage value of the positive polarity and the absolute value **Vb** of the voltage value of the negative polarity. When the current target calculation unit **7c** concludes, based on the voltage difference **F,** that the abnormality has occurred (time point **t21),** the current target calculation unit **7c** gradually decreases the current target value.

Consequently, the duty cycle of the driving signal **S1** provided to the switching element **Q1** is decreased gradually, and, for example, the DC output Po from the DC/DC converter **1** is gradually decreased from 35 W down to 26 W. Throughout this operation, the driver control unit **7e** drives the switching elements **Q2** to **Q5** to continue the operation of the inverter **3.** Note that, values (predetermined values) before and after a gradual decrease in the DC output Po may be selected appropriately, and are not limited to particular values. For example, the predetermined value may be zero or more. When the predetermined value is zero, the controller **7** may decrease power supplied to the discharge lamp **La** down to a certain value and subsequently terminate the operation of the lighting circuit unit 10.

Hence, when a ground fault occurs, the DC output Po from the DC/DC converter **1** is gradually decreased, and the ground fault current **Is** also is decreased. Therefore, a loss of circuits and a stress of components can be suppressed and the circuit destruction can be prevented.

Alternatively, as shown in charts (a) to (e) of FIG. 11, upon acknowledging based on the voltage difference **F** that the abnormality has occurred (time point **t31),** the current target calculation unit **7c** may decrease the current target value in a stepwise manner. In this arrangement, the DC output Po from the DC/DC converter **1** is decreased in a stepwise manner.

Additionally, the discharge lamp lighting device **"A"** of the present embodiment enables the second protective function using the voltage difference F after the state of the discharge lamp **La** is changed from the state in the start-up period to the state in the steady lighting period.

With regard to FIG. 9, the periods **Ta** and **Tb** are the start-up periods, and the period **Tc** is the steady lighting period. The controller **7** activates the second protective operation after the state of the discharge lamp **La** is changed from the state in the start-up periods **Ta** and **Tb** to the state in the steady lighting period **Tc.**

In this manner, the second protective function using the voltage difference F is not activated in the start-up periods **Ta** and **Tb** in which the lamp voltage **Vla** fluctuates greatly. Consequently, it is possible to prevent the false operation of terminating the circuit operation in response to the false detection of the abnormality in the start-up periods **Ta** and **Tb.**

Note that, the controller **7** does not necessarily need to decrease power supplied to the discharge lamp **La** gradually. Hence, upon concluding that the abnormality has occurred, the controller **7** may decrease power supplied to the discharge lamp **La** down to a predetermined value immediately. In this modification, the controller **7** may immediately terminate the operation of the lighting circuit unit **10** upon concluding that the abnormality has occurred.

As mentioned above, in the discharge lamp lighting device **"A"** of the present embodiment, the controller **7** calculates the voltage difference **F** representing the difference between the absolute value of the lamp voltage detection value of the first polarity and the absolute value of the lamp voltage detection value of the second polarity respectively obtained before and after the reversal of the polarity. When the state (asymmetry state) where the voltage difference **F** is kept not less than (is kept equal to or more than) the threshold **K2** has occurred over the predetermined period **T2,** the controller **7** concludes that the abnormality has occurred.

Further, in the discharge lamp lighting device **"A"** of the present embodiment, the threshold (second threshold) **K2** is not less than one-half of the rated lamp voltage of the discharge lamp **La.**

In other words, the discharge lamp lighting device **"A"** of the present embodiment includes the following thirteenth and fourteenth features in addition to the aforementioned first and second features. Note that, the fourteenth feature is optional.

As for the thirteenth feature, the controller **7** is configured to calculate the difference (voltage difference) **F** between the absolute values of the respective first and second measured values and, upon acknowledging that an absolute value of the difference (voltage difference) **F** is not less than the threshold (second threshold) **K2,** conclude that the asymmetric state has occurred.

As for the fourteenth feature, the threshold (second threshold) **K2** is not less than one-half of the rated lamp voltage of the discharge lamp **La.**

Moreover, the discharge lamp lighting device **"A"** of the present embodiment may include one or more optional features selected from the aforementioned fifth to twelfth features.

### (THIRD EMBODIMENT)

In the present embodiment, when the current target calculation unit **7c** concludes, by use of the second protective function, that the abnormality has occurred, the driver control unit **7e** terminates the polarity reversal function of the inverter **3** and controls the inverter **3** in such a manner to output a DC voltage therefrom. Besides, the present embodiment includes the other configurations same as those of the first or second embodiment, and such configurations are designated by the same reference numerals, and explanations thereof are deemed unnecessary.

The lighting circuit unit **10** includes the DC/DC converter **1** and the inverter **3.** The lighting circuit unit **10** outputs an AC voltage by turning on and off alternately the set of the switching elements **Q2** and **Q5** and the set of the switching elements **Q3** and **Q4** of the inverter **3.**

Additionally, the lighting circuit unit **10** can output a DC voltage with the positive polarity (i.e., a positive DC voltage) by keeping the set of the switching elements **Q2** and **Q5** of the inverter **3** turned on and the set of the switching elements **Q3** and **Q4** of the inverter **3** turned off. Further, the lighting circuit unit **10** can output a DC voltage with the negative polarity (i.e., a negative DC voltage) by keeping the set of the switching elements **Q2** and **Q5** of the inverter 3 turned off and the set of the switching elements **Q3** and **Q4** of the inverter **3** turned on.

In brief, the lighting circuit unit **10** has a function of applying a DC voltage with the positive or negative polarity to the discharge lamp **La,** in addition to the function of applying an AC voltage to the discharge lamp **La.**

In the present embodiment, the controller **7** is configured to, upon concluding that the abnormality has occurred, control the lighting circuit unit **10** in such a manner to supply to the discharge lamp La a DC voltage having the same polarity as that corresponding to larger one of the absolute values of the respective first and second measured values.

When larger one of the absolute values of the respective first and second measured values is corresponding to the positive polarity, the controller **7** controls the lighting circuit unit **10** in such a manner to supply a DC voltage with the positive polarity to the discharge lamp **La.** For example, the controller **7** keeps turning on the switching elements **Q2** and **Q5** of the inverter **3** and turning off the switching elements **Q3** and **Q4** of the inverter **3,** thereby supplying a DC voltage with the positive polarity (a positive DC voltage) to the discharge lamp **La** from the lighting circuit unit **10.** In this situation, the point **X1** on the first end side of the discharge lamp **La** has an electrical potential higher than that at the point **X2** on the second end side of the discharge lamp **La.**

In contrast, when larger one of the absolute values of the respective first and second measured values is corresponding to the negative polarity, the controller **7** controls the lighting circuit unit **10** in such a manner to supply a DC voltage with the negative polarity to the discharge lamp **La.** For example, the controller **7** keeps turning off the switching elements **Q2** and **Q5** of the inverter **3** and turning on the switching elements **Q3** and **Q4** of the inverter **3,** thereby supplying a DC voltage with the negative polarity (a negative DC voltage) to the discharge lamp **La** from the lighting circuit unit **10.** In this situation, the point **X1** on the first end side of the discharge lamp **La** has an electrical potential lower than that at the point **X2** on the second end side of the discharge lamp **La.**

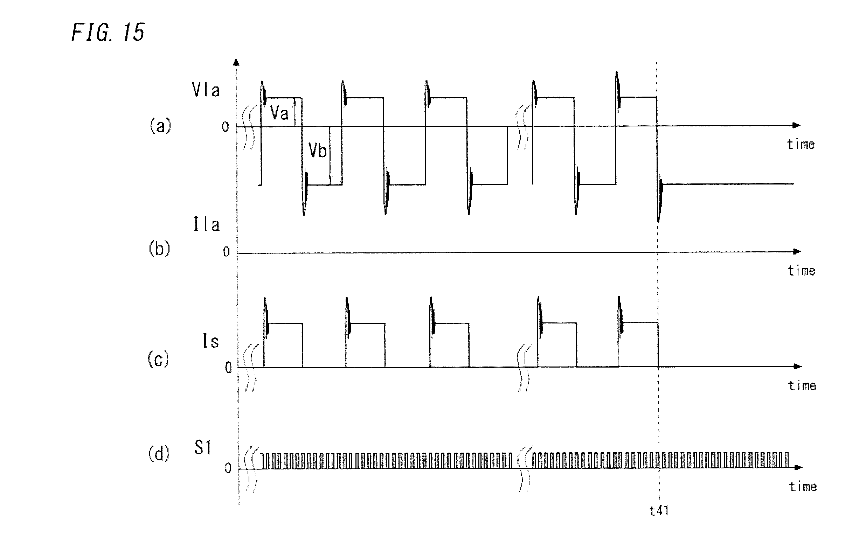

For example, as shown in FIG. 15(a) to (d), the lamp current **Ila** does not flow due to a ground fault at the point **X1,** and the discharge lamp **La** is extinguished, and the ground fault current **Is** having the positive polarity occurs. In this situation, the lamp voltage **Vla** has asymmetry between the absolute value **Va** of the positive polarity and the absolute value **Vb** of the negative polarity.

When the current target calculation unit **7c** concludes, based on the voltage proportion **D** or the voltage difference **F,** that the abnormality has occurred (time point **t41),** the driver control unit **7e** terminates the switching operation of the switching elements **Q2** to **Q5** of the inverter **3** to deactivate the polarity reversal function of the inverter **3.**

While a ground fault occurs, the absolute value **Vb** of the negative polarity is greater than the absolute value **Va** of the positive polarity. Hence, the driver control unit **7e** controls the switching elements **Q2** to **Q5** to allow the inverter **3** to output a DC voltage with the negative polarity having the higher absolute value.

In brief, the controller **7** controls the lighting circuit unit **10** in such a manner to supply to the discharge lamp **La** a DC voltage having the same polarity (negative polarity) as that corresponding to larger one (the absolute value **Vb)** of the absolute values **Va** and **Vb** of the respective first and second measured values.

Specifically, the driver control unit **7e** keeps the switching elements **Q3** and **Q4** in the on-state and keeps the switching elements **Q2** and **Q5** in the off-state such that the inverter **3** outputs a DC voltage with the negative polarity. Note that, even after the controller **7** concludes, based on the voltage proportion **D** or the voltage difference **F,** that the abnormality has occurred, the controller **7** continues to output the driving signal **S1** to turn on and off the switching element **Q1.**

Accordingly, when a ground fault occurs, the inverter **3** outputs a DC voltage having the relatively high absolute value. Thus, no ground fault **Is** flows. Consequently, a loss of circuits and a stress of components can be suppressed and the circuit destruction can be prevented.

For example, when the lamp current **Ila** does not flow due to a ground fault at the point **X2,** and the discharge lamp **La** is extinguished, and the ground fault current **Is** occurs, the driver control unit **7e** controls the switching elements **Q2** to **Q5** to allow the inverter **3** to output a DC voltage with the positive polarity having the higher absolute value. In brief, the controller **7** controls the lighting circuit unit **10** in such a manner to supply to the discharge lamp **La** a DC voltage having the same polarity (positive polarity) as that corresponding to larger one (the absolute value **Va)** of the absolute values **Va** and **Vb** of the respective first and second measured values.

Specifically, the driver control unit **7e** keeps the switching elements **Q2** and **Q5** in the on-state and keeps the switching elements **Q3** and **Q4** in the off-state such that the inverter **3** outputs a DC voltage with the positive polarity. Also in this situation, since no ground fault **Is** flows, a loss of circuits and a stress of components can be suppressed and the circuit destruction can be prevented.

As mentioned above, in the discharge lamp lighting device **"A"** of the present embodiment, upon concluding that the abnormality has occurred, the controller **7** controls the inverter **3** such that the inverter **3** outputs a DC voltage with a polarity corresponding to the higher absolute value of the voltage detection value out of the first polarity and the second polarity.

In other words, the discharge lamp lighting device **"A"** of the present embodiment includes the following fifteenth feature in addition to the first and eighth features. As for the fifteenth feature, the lighting circuit unit **10** has a function of applying a DC voltage to the discharge lamp **La.** The controller **7** is configured to, upon concluding that the abnormality has occurred, control the lighting circuit unit **10** in such a manner to supply to the discharge lamp **La** a DC voltage having the same polarity as that corresponding to larger one of the absolute values of the respective first and second measured values.

Note that, the discharge lamp lighting device **"A"** of the present embodiment may include one or more optional features selected from the aforementioned second to seventh, ninth, and twelfth features. Further, the discharge lamp lighting device **"A"** of the present embodiment may include one or more optional features selected from the aforementioned thirteenth and fourteenth features, instead of the aforementioned third and fourth features.

### (FOURTH EMBODIMENT)

The controller **7** of the present embodiment is configured to, when the number of times that the voltage proportion **D** is not less than the threshold **K1** or the number of times that the voltage difference **F** is not less than the threshold **K2** is not less than a predetermined number of times before a passage of a predefined period (prescribed period) **T3,** conclude that the abnormality has occurred. Besides, the present embodiment includes the other configurations same as those of any one of the first to third embodiments, and such configurations are designated by the same reference numerals, and explanations thereof are deemed unnecessary.

In other words, the controller **7** is configured to, upon acknowledging that the number of times of occurrence of the state (asymmetric state) is not less than the predetermined number of times **N** before a passage of the prescribed period **T3,** conclude that the state (asymmetric state) has occurred over the predetermined period **T1** (or **T2).**

For example, the prescribed period **T3** may have the same length as that of the predetermined period **T1** (or **T2),** and may have a length shorter than that of the predetermined period **T1** (or **T2).** Preferably, the predetermined number of times **N** is not less than two.

The prescribed period **T3** and the predetermined number of times **N** are selected such that the occurrence of a temporal state (asymmetric state) due to a cause different from a ground fault can be distinguished from the occurrence of a state (asymmetric state) due to a ground fault.

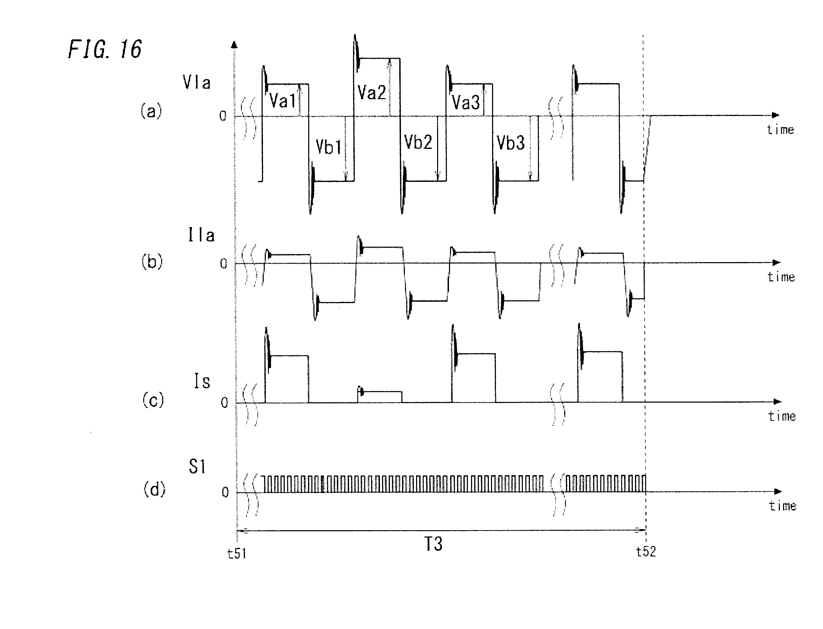

For example, as shown in FIG. 16(a) to (d), when a ground fault occurs at the point **X1,** the discharge lamp **La** is not extinguished, and the lamp current **Ila** continues to flow, and additionally the ground fault current **Is** occurs. While this ground fault occurs, the absolute values **Va** and **Vb** of the lamp voltage **Vla** are likely to fluctuate (see FIG. 16 (a)).

For example, at a first timing, the absolute values **Va** and **Vb** have **Va1** and **Vb1** respectively, and **Va1** is less than **Vb1.** At a second timing subsequent to the first timing, the absolute values **Va** and **Vb** have **Va2** and **Vb2** respectively, and **Va2** is substantially equal to **Vb2.** At a third timing subsequent to the second timing, the absolute values **Va** and **Vb** have **Va3** and **Vb3** respectively, and **Va3** is substantially equal to **Vb3**. At the first timing, the voltage proportion **D** has **D1** = **Va1** / **Vb1 > K1.** At the second timing, the voltage proportion **D** has **D2** = **Va2** / **Vb2** < **K1.** At the third timing, the voltage proportion **D** has **D3** = **Va3** / **Vb3** > **K1.**

In this regard, for example, a judgment criterion for the occurrence of the abnormality is that a state where the voltage proportion **D** is not less than the threshold **K1** has occurred over the predetermined period **T1** continuously, and the predetermined period **T1** is counted by use of a timer. In such a situation, when the voltage proportion **D** is changed from **D1** to **D2,** there is a possibility that the counted time of the timer is reset.

In view of this, in the present embodiment, upon acknowledging that the number of times of an event where the voltage proportion **D** is not less than the threshold **K1** or the number of times of an event where the voltage difference **F** is not less than the threshold **K2** is equal to or more than the predetermined number of times before a passage of the predefined period **T3,** the current target calculation unit **7c** of the controller **7** concludes that the abnormality has occurred.

For example, when the number of times of the event where the voltage proportion **D** is not less than the threshold **K1** or the number of times of the event where the voltage difference **F** is not less than the threshold **K2** is identical to **N** in the period **T3** between time points **t51** and t**52** shown in FIG. 16, the current target calculation unit **7c** concludes that the abnormality has occurred.

Hence, even in a situation where the lamp voltage **Vla** fluctuates due to occurrence of a ground fault, it is enabled to terminate the circuit operation.

As mentioned above, in the discharge lamp lighting device **"A"** of the present embodiment, when the number of times that the controller **7** detects a state where a difference not less than the threshold occurs between the voltage detection value of the first polarity and the voltage detection value of the second polarity becomes equal to or more than the predetermined number of times **N** before a passage of the predefined period **T3,** the controller **7** concludes that the abnormality has occurred.

In other words, the discharge lamp lighting device **"A"** of the present embodiment includes the following sixteenth feature in addition to the first feature. As for the sixteenth feature, the controller **7** is configured to, upon acknowledging that the number of times of occurrence of the asymmetric state becomes not less than (equal to or more than) the predetermined number of times **N** before a passage of the prescribed period **T3,** conclude that the asymmetric state has occurred over the predetermined period **T1.**

Note that, the discharge lamp lighting device **"A"** of the present embodiment may include one or more optional features selected from the aforementioned second to fourth and eighth to twelfth features. Further, the discharge lamp lighting device **"A"** of the present embodiment may include one or more optional features selected from the aforementioned thirteenth and fourteenth features, instead of the aforementioned third and fourth features. Furthermore, the discharge lamp lighting device **"A"** of the present embodiment may include the fifteenth feature, instead of the aforementioned tenth and eleventh features.

### (FIFTH EMBODIMENT)

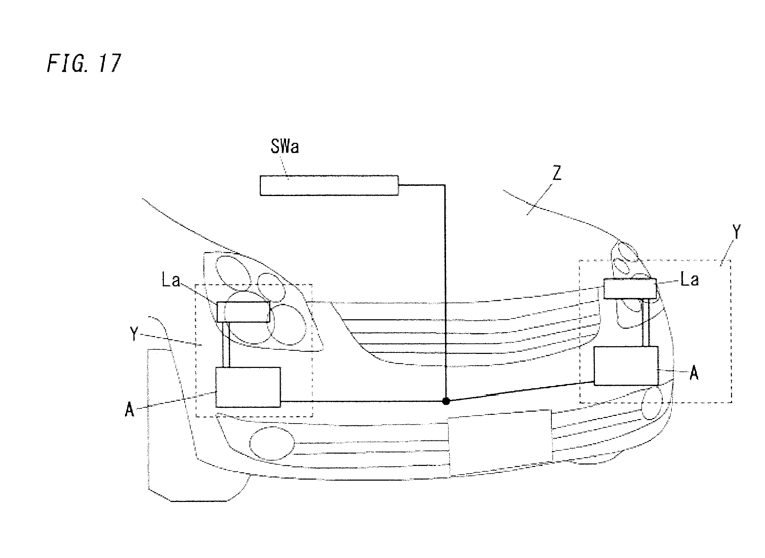

FIG. 17 is a schematic diagram illustrating a car **"Z"** employing the discharge lamp lighting device **"A"** according to any one of the first to fourth embodiments as an automotive high-intensity discharge lamp lighting device.

The discharge lamp lighting device **"A"** (automotive high-intensity discharge lamp lighting device) is mounted on the car **"Z"** such as an automobile, and is designed to light the high-intensity discharge lamp **La** serving as a headlight of the car **"Z".**

That is, the automotive high-intensity discharge lamp lighting device in accordance with the present embodiment uses the discharge lamp lighting device **"A"** according to any one of the first to fourth embodiments to light the high-intensity discharge lamp (discharge lamp) **La**. In other words, the automotive high-intensity discharge lamp lighting device of the present embodiment is defined by the discharge lamp lighting device **"A"** employing the aforementioned first feature, and is configured to light the high-intensity discharge lamp **La.**

Moreover, the discharge lamp lighting device **"A"** and the high-intensity discharge lamp La which are mounted on the car **"Z"** constitute an automotive headlight device **"Y".**

Namely, the automotive headlight device **"Y"** in accordance with the present embodiment includes the discharge lamp lighting device **"A"** according to any one of the first to fourth embodiments and the discharge lamp **La** lit by the discharge lamp lighting device **"A".** In other words, the automotive headlight device **"Y"** in accordance with the present embodiment includes the discharge lamp **La** and the discharge lamp lighting device **"A"** involving the aforementioned first feature. **The** discharge lamp lighting device **"A"** is configured to light the discharge lamp **La.**

In the automotive high-intensity discharge lamp lighting device and the automotive headlight device **"Y",** the discharge lamp lighting device **"A"** may include one or more optional features selected from the aforementioned second to twelfth features. Further, the discharge lamp lighting device **"A"** may include one or more optional features selected from the aforementioned thirteenth and fourteenth features, instead of the aforementioned third and fourth features. Furthermore, the discharge lamp lighting device **"A"** may include the fifteenth feature, instead of the aforementioned tenth and eleventh features. Moreover, the discharge lamp lighting device **"A"** may include the sixteenth feature, instead of the aforementioned fifth to seventh features.

Further, the car **"Z"** in accordance with the present embodiment includes the automotive headlight device **"Y".**

In recent years, to secure a living space in an automobile and to save weight for improvement of a fuel efficiency, an engine room tends to be downsized and such downsizing is likely to cause an increase in a temperature in the engine room. Additionally, since the engine room is equipped with an engine having a high calorific value, the temperature in the engine room tends to be more increased.

The discharge lamp lighting device **"A"** used for the automotive headlight device **"Y"** is installed in this engine room, and is required to have a fail-safe function of terminating the circuit operation in response to the occurrence of the abnormality of the load for protection of the circuit. In brief, the discharge lamp lighting device **"A"** is required to have high robustness in a hot environment.

In view of this, with employing the discharge lamp lighting device **"A"** according to any one of the first to fourth embodiments, it is possible to successfully prevent circuit breakage which would otherwise occur due to thermal stress caused by the abnormality (e.g., a ground fault). Moreover, since the discharge lamp lighting device **"A"** can produce the above effect with a simplified circuit configuration, it is possible to downsize the discharge lamp lighting device **"A".**

## Claims

1. A discharge lamp lighting device comprising a controller configured to perform an abnormality judgment process of judging whether or not abnormality has occurred based on a measured value of a driving voltage defined as an AC voltage applied to a discharge lamp,
wherein:
the controller is configured to, in the abnormality judgment process, judge whether or not an asymmetric state in which the driving voltage lacks symmetry has occurred over a predetermined period; and
the controller is configured to, upon concluding that the asymmetric state has occurred over the predetermined period, conclude that the abnormality has occurred.

2. The discharge lamp lighting device as set forth in claim 1, wherein
the controller is configured to, upon acknowledging that an absolute value of one of a first measured value defined as the measured value obtained before a reversal of polarity of the driving voltage and a second measured value defined as the measured value obtained after the reversal of polarity of the driving voltage is greater than an absolute value of the other of the first measured value and the second measured value, conclude that the asymmetric state has occurred.

3. The discharge lamp lighting device as set forth in claim 2, wherein
the controller is configured to:
calculate a proportion of a larger one of the absolute values of the respective first and second measured values to a smaller one of the absolute values of the respective first and second measured values; and
upon acknowledging that the proportion is not less than a threshold, conclude that the asymmetric state has occurred.

4. The discharge lamp lighting device as set forth in claim 3, wherein
the threshold is not less than 1.5.

5. The discharge lamp lighting device as set forth in claim 2, wherein
the controller is configured to:
calculate a difference between the absolute values of the respective first and second measured values; and
upon acknowledging that an absolute value of the difference is not less than a threshold, conclude that the asymmetric state has occurred.

6. The discharge lamp lighting device as set forth in claim 5, wherein
the threshold is not less than one-half of a rated lamp voltage of the discharge lamp.

7. The discharge lamp lighting device as set forth in any one of claims 1 to 6, wherein
the controller is configured to, upon acknowledging that the asymmetric state continues for the predetermined period, conclude that the asymmetric state has occurred over the predetermined period.

8. The discharge lamp lighting device as set forth in claim 7, wherein
the predetermined period has a length equal to that of a start-up period of the discharge lamp.

9. The discharge lamp lighting device as set forth in claim 7 or 8, wherein
the predetermined period has a length not less than 10 seconds.

10. The discharge lamp lighting device as set forth in any one of claims 1 to 9, wherein
the controller is configured to, upon acknowledging that the number of times of occurrence of the asymmetric state is not less than a predetermined number of times before a passage of a prescribed period, conclude that the asymmetric state has occurred over the predetermined period.

11. The discharge lamp lighting device as set forth in any one of claims 1 to 10, wherein
the discharge lamp lighting device further comprising a lighting circuit unit having a function of applying an AC voltage to the discharge lamp, and
the controller is configured to control the lighting circuit unit to adjust power supplied to the discharge lamp.

12. The discharge lamp lighting device as set forth in claim 11, wherein
the lighting circuit unit comprises:
a power converter configured to generate DC power by use of power from an external power source;
an inverter configured to apply an AC voltage to the discharge lamp by use of the DC power generated by the power converter;
a voltage detector configured to measure a voltage applied to the discharge lamp; and
a current detector configured to measure a current flowing through the discharge lamp,
the controller is configured to adjust the DC power generated by the power converter based on a measured value of the voltage detector and a measured value of the current detector.

13. The discharge lamp lighting device as set forth in claim 11 or 12, wherein
the controller is configured to, upon concluding that the abnormality has occurred, decrease power supplied to the discharge lamp down to a predetermined value.

14. The discharge lamp lighting device as set forth in claim 13, wherein
the controller is configured to gradually decrease power supplied to the discharge lamp.

15. The discharge lamp lighting device as set forth in claim 11 or 12, wherein
the lighting circuit unit has a function of applying a DC voltage to the discharge lamp, and
the controller is configured to, upon concluding that the abnormality has occurred, control the lighting circuit unit in such a manner to supply to the discharge lamp a DC voltage having the same polarity as that corresponding to larger one of the absolute values of the respective first and second measured values.

16. The discharge lamp lighting device as set forth in any one of claims 1 to 15, wherein
the controller is configured to start the abnormality judgment process after the discharge lamp is changed from a state in the start-up period to a state in a steady lighting period.

17. An automotive high-intensity discharge lamp lighting device defined by the discharge lamp lighting device according to any one of claims 1 to 16, and configured to light a high-intensity discharge lamp.

18. An automotive headlight device comprising:
a discharge lamp; and
the discharge lamp lighting device according to any one of claims 1 to 16,
wherein the discharge lamp lighting device is configured to light the discharge lamp.

19. A car comprising the automotive headlight device according to claim 18.
